(19) Europäisches Patentamt
European Patent Office
Office européen des brevets

(11) **EP 3 971 146 A1**

(12) **EUROPÄISCHE PATENTANMELDUNG**

(43) Veröffentlichungstag:
**23.03.2022 Patentblatt 2022/12**

(21) Anmeldenummer: **21194970.6**

(22) Anmeldetag: **06.09.2021**

(51) Internationale Patentklassifikation (IPC):
**C03C 1/04** (2006.01)   **C03C 3/076** (2006.01)
**C03C 3/091** (2006.01)   **C03C 3/097** (2006.01)
**C03C 4/02** (2006.01)   **C03C 8/02** (2006.01)
**C03C 8/04** (2006.01)   **C03C 8/14** (2006.01)
**C03C 17/00** (2006.01)   **C03C 17/04** (2006.01)

(52) Gemeinsame Patentklassifikation (CPC):
**C03C 8/14; C03C 1/04; C03C 3/076; C03C 3/091;**
**C03C 3/097; C03C 4/02; C03C 8/02; C03C 8/04;**
**C03C 17/007; C03C 17/008; C03C 17/04;**
C03C 2217/452; C03C 2217/475; C03C 2217/478;
C03C 2217/48;                                   (Forts.)

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **08.09.2020   DE 102020123403**

(71) Anmelder: **SCHOTT AG**
**55122 Mainz (DE)**

(72) Erfinder:
• **KRECHEL, Ricarda**
**55124 Mainz (DE)**

• **STEIGENBERGER, Vera**
**65474 Bischofsheim (DE)**
• **SCHWALL, Dr. Michael**
**Knoxville, 37934 (US)**
• **CALDWELL, Daniel**
**Chattanooga, TN, 37411 (US)**
• **NEITZEL, Dr. Ioannis**
**86399 Bobingen (DE)**
• **NATTERMANN, Dr. Kurt**
**55437 Ockenheim (DE)**

(74) Vertreter: **Blumbach · Zinngrebe Patentanwälte**
**PartG mbB**
**Alexandrastraße 5**
**65187 Wiesbaden (DE)**

(54) **GLASELEMENT UMFASSEND EMAILLEBESCHICHTUNG UND DESSEN VERWENDUNG, BESCHICHTUNGSMITTEL ZU DESSEN HERSTELLUNG UND VERFAHREN ZUR HERSTELLUNG DES BESCHICHTUNGSMITTELS**

(57)   Die Erfindung betrifft allgemein Glaselemente, insbesondere Glaselemente umfassend wenigstens eine auf wenigstens einer Seite des Glaselements angeordnete Beschichtung. Weitere Aspekte der Erfindung betreffen ein Beschichtungsmittel, ein Verfahren zu dessen Herstellung sowie die Verwendung eines Glaselements.

Fig. 1

EP 3 971 146 A1

(52) Gemeinsame Patentklassifikation (CPC): (Forts.)
C03C 2217/485; C03C 2217/72; C03C 2218/119

**Beschreibung**

Gebiet der Erfindung

Die Erfindung betrifft allgemein Glaselemente, insbesondere Glaselemente umfassend wenigstens eine auf wenigstens einer Seite des Glaselements angeordnete Beschichtung. Weitere Aspekte der Erfindung betreffen ein Beschichtungsmittel, ein Verfahren zu dessen Herstellung sowie die Verwendung eines Glaselements.

Hintergrund der Erfindung

Glasscheiben mit Anwendung in Haushaltsgeräten werden zu Design- und Funktionszwecken häufig mit sogenannten Dekoren, also anorganischen, glasbasierten Emailleschichten, beschichtet. Es ist allerdings bekannt, dass diese Dekore bzw. Emailleschichten die Bruchfestigkeit der Glasscheiben reduzieren.

Zur Lösung des Problems der reduzierten Festigkeit von einer mit einer Emailleschicht bedruckten Glasscheiben sowie weiterer Probleme, wie beispielsweise der Bereitstellung einer chemisch besonders beständigen Beschichtung wird in der US-amerikanischen Patentanmeldung US 2016/0185657 A1 ein Mehrlagen-Emaille vorgeschlagen. Jede Lage dieser Mehrlagen-Emaille wird dabei gedruckt und anschließend eingebrannt, bevor die jeweils nächste Lage aufgebracht wird, wobei jede Lage auf den entsprechenden Verwendungszweck angepasst werden kann. Jedoch ist ein solches Vorgehen aufwendig und kostenintensiv. Weiterhin kann es zum Abplatzen der Beschichtung kommen, wenn die kritische Schichtdicke — die vom thermischen Ausdehnungskoeffizienten bzw. dem Unterschied der thermischen Ausdehnungskoeffizienten von Beschichtung und Substrat abhängig ist — überschritten ist.

Es ist weiterhin bekannt, flüssigen Beschichtungsmaterialien Füllstoffe zuzusetzen, insbesondere aus Kostengründen, da Füllstoffe zumeist günstiger sind als weitere Komponenten, wie beispielsweise Pigmente, oder weil Füllstoffe der resultierenden Beschichtung bestimmte vorteilhafte Eigenschaften verleihen können. Unter einem Füllstoff wird allgemein ein Zusatzstoff zu einer Zusammensetzung oder einem Material verstanden. Ein Füllstoff kann die Eigenschaften der betrachteten Zusammensetzung verändern, beispielsweise deren Verarbeitbarkeit. Häufig sind Füllstoffe auch günstiger als andere Komponenten der Zusammensetzung.

Beispielsweise beschreibt die US-amerikanische Patentschrift US 5,691,254 eine Emaille-Zusammensetzung für die Beschichtung einer niedrigdehnenden Glaskeramik, wie sie beispielsweise als Kochfläche verwendet wird. Die Emaillebeschichtung kann dabei neben einer Glaskomponente und dem oder den Farbpigmenten auch bis zu 54 Gew.-% Füllstoff umfassen, wobei der Füllstoff zugesetzt wird, um eine besonders abrasionsfeste Emaillebeschichtung zu erzielen. Der Füllstoff umfasst dabei nach der US 5,691,254 insbesondere Zirkonium oder Zirkoniumoxid. Eine Verbesserung der mechanischen Festigkeit der beschichteten Glaskeramikplatte ist nicht adressiert.

Auch die US-amerikanische Patentschrift US 5,412,877 beschreibt eine Zusammensetzung einer keramischen Farbe (oder Emaille) mit einem niedrigen Schmelzpunkt, die einen Füllstoff umfassen kann, wobei der Füllstoff beispielsweise zur Einstellung der Einbrandbedingungen oder des thermischen Ausdehnungskoeffizienten der Emaillebeschichtung dienen kann. Die Glasfritte umfasst Bleioxid PbO. Eine Verbesserung der mechanischen Festigkeit der beschichteten Glasplatte ist auch hier nicht angesprochen.

Weiterhin beschreibt auch die US-amerikanische Patentschrift US 2016/0031748 A1 eine keramische Farbe, welche einen Füllstoff umfasst. Die keramische Farbe wird auf ein metallisches Substrat beschichtet. Die Beschichtung eines Glassubstrats ist nicht angesprochen.

Es besteht somit ein Bedarf an Glaselementen umfassend eine Beschichtung, welches die vorstehend genannten Probleme des Standes der Technik, insbesondere hinsichtlich der Bruchfestigkeit, zumindest mindert. Weiterhin besteht auch ein Bedarf an verbesserten Beschichtungszusammensetzungen.

Aufgabe der Erfindung

Die Aufgabe der Erfindung besteht darin, Glaselemente bereitzustellen, welche eine Beschichtung umfassen und gleichzeitig eine hohe mechanische Festigkeit, insbesondere eine hohe Bruchfestigkeit, aufweisen.

Zusammenfassung der Erfindung

Die Aufgabe der Erfindung wird gelöst durch den Gegenstand der unabhängigen Ansprüche. Bevorzugte und spezielle Ausführungsformen finden sich in den Unteransprüchen sowie in Beschreibung und Zeichnungen.

Die vorliegende Offenbarung betrifft damit ein Glaselement, insbesondere ein vorgespanntes Glaselement, bevorzugt ein thermisch vorgespanntes Glaselement, umfassend ein scheibenförmiges Glassubstrat mit einer ersten Oberfläche und einer zweiten, der ersten Oberfläche gegenüberliegenden Oberfläche sowie einer auf wenigstens eine der Oberfläche des Glassubstrats zumindest bereichsweise angeordnete Beschichtung. Die Beschichtung ist als anorganische, glasbasierte Beschichtung, vorzugsweise als Emaillebeschichtung, ausgebildet, umfassend wenigstens eine glasige Komponente, wenigstens ein Pigment umfassend Pigmentpartikel sowie einen Füllstoff. Der Füllstoff ist anorganisch ausgebildet. Der Füllstoff umfasst Füllstoffpartikel mit einem $d_{50}$-Wert, bezogen auf den Äquivalentdurchmesser, von mindestens 0,1 $\mu$m, bevorzugt mindestens 0,3 $\mu$m, und weniger als 10 $\mu$m, bevorzugt weniger als 5 $\mu$m.

Alternativ oder zusätzlich zum Füllstoff kann die Beschichtung auch eine weitere glasige Komponente umfassen.

Vorzugsweise resultiert durch die Zusammensetzung der Beschichtung ein thermischer Ausdehnungskoeffizient der Beschichtung, welcher kleiner oder gleich dem thermischen Ausdehnungskoeffizienten des Glassubstrats ist. Bevorzugt ist der thermische Ausdehnungskoeffizient der Beschichtung kleiner als der des Glassubstrats.

Im Rahmen der vorliegenden Offenbarung kann der durch die Zusammensetzung der Beschichtung resultierende thermische Ausdehnungskoeffizient auch als "resultierender thermischer Ausdehnungskoeffizient" der Beschichtung bezeichnet werden. Sofern lediglich der thermische Ausdehnungskoeffizient der Beschichtung genannt ist, wird darunter ebenfalls der "resultierende thermische Ausdehnungskoeffizient" der Beschichtung verstanden.

Eine solche Ausgestaltung eines Glaselements ist vorteilhaft, da es auf diese Weise, insbesondere durch den Zusatz des Füllstoffs, möglich ist, die Zusammensetzung der Beschichtung so zu variieren und einzustellen, dass ein Glaselement erhalten werden kann, das im Vergleich zu Glaselementen des Standes der Technik, welche ebenfalls eine glasbasierte Beschichtung, beispielsweise eine Emaillebeschichtung (welche auch als "Dekor" oder "Dekorschicht" bezeichnet werden kann) umfassen, eine erhöhte mechanische Festigkeit aufweist. Mit anderen Worten ist es mit einer solchen Ausgestaltung möglich, dass beispielsweise ein dünneres, mit einer glasbasierten Beschichtung umfassend Füllstoffe versehenes, Glaselement gleicher Festigkeit erhalten wird wie ein Glaselement mit herkömmlicher glasbasierter Beschichtung, welches aber eine erhöhte Substratdicke aufweist.

Das Glaselement kann dabei insbesondere vorgespannt, beispielsweise thermisch vorgespannt, vorliegen. Dies ist vorteilhaft, da auf diese Weise die Festigkeit des Glases gegenüber einer mechanischen Beanspruchung erhöht wird.

Der Füllstoff ist dabei anorganisch ausgebildet, was vorteilhaft ist, da er auf diese Weise auch bei hohen Einbrandtemperaturen, wie sie beispielsweise bei glasbasierten oder glasflussbasierten Beschichtungen, wie Emaillebeschichtungen, üblich sind, thermisch stabil ist. Unter thermischer Stabilität wird dabei insbesondere verstanden, dass der Füllstoff sich nicht zersetzt. Darunter wird insbesondere verstanden, dass der Füllstoff nicht durch eine Zersetzungsreaktion in neue Phasen aufgespalten wird. Beispielsweise ist es sogar möglich, dass der Füllstoff in dem Sinne thermisch stabil ist, dass die strukturelle Integrität des Füllstoffs auch beim Einbrennvorgang der Beschichtung erhalten bleibt. Vorzugsweise ist der Füllstoff anorganisch oxidisch ausgebildet.

Der Füllstoff ist so ausgebildet, dass er Füllstoffpartikel mit einem $d_{50}$-Wert, bezogen auf den Äquivalentdurchmesser, von mindestens 0,1 $\mu$m, bevorzugt mindestens 0,3 $\mu$m, und weniger als 10 $\mu$m, bevorzugt weniger als 5 $\mu$m, umfasst.

Die Beschichtung kann dabei so ausgestaltet sein, dass die Füllstoffpartikel nicht aus der Beschichtung hinausragen, insbesondere also so, dass die Füllstoffpartikel keine Erhebungen auf der Beschichtung ausbilden oder aus der Beschichtung herausragen. Gemäß einer Ausführungsform ist das Glaselement so ausgestaltet, dass die Füllstoffpartikel vollständig von der glasigen Komponente umhüllt sind. Eine solche Ausgestaltung kann insbesondere vorteilhaft sein zur Ausbildung einer glatten, kratzfesten Beschichtung und/oder eine Beschichtung mit einer guten Reinigbarkeit. Vorteilhaft kann dies insbesondere durch einen kleinen $d_{50}$-Wert des Äquivalentdurchmessers der Füllstoffpartikel von weniger als 10 $\mu$m, bevorzugt weniger als 5 $\mu$m oder sogar weniger als 1 $\mu$m erzielt werden. Allerdings sollten die Füllstoffpartikel auch nicht zu klein sein, da sonst der Bedarf an glasiger Komponente — also dem Bindemittel — zu hoch wird und/oder keine ausreichend haftfeste Beschichtung mehr erzielt werden kann. Bevorzugt ist daher der $d_{50}$-Wert des Äquivalentdurchmessers der Füllstoffpartikel mindestens 0,1 $\mu$m, bevorzugt mindestens 0,3 $\mu$m.

Umfasst die Beschichtung alternativ oder zusätzlich zum Füllstoff eine weitere glasige Komponente, so kann die Beschichtung allgemein so ausgebildet sein, dass sie ein inhomogenes Glasmaterial umfasst. Die Beschichtung umfasst also gemäß dieser Ausführungsform ein Glasmaterial, das vorzugsweise zwei glasige Phasen umfasst, welche beispielsweise eine unterschiedliche Zusammensetzung aufweisen.

Im Rahmen der vorliegenden Offenbarung geltenden die folgenden Definitionen:

Unter einem Glaselement wird ein veredeltes Glassubstrat verstanden. Insbesondere kann ein Glaselement verstanden werden als umfassend ein Glassubstrat und wenigstens eine auf wenigstens einer Oberfläche des Glassubstrats zumindest bereichsweise angeordnete Beschichtung.

Unter einem Glassubstrat wird ein Formkörper aus oder umfassend ein glasiges Material verstanden.

Unter einem glasigen Material (oder: Glas) wird ein anorganisches Material verstanden, welches aus einem Gemenge in einem Schmelzprozess erhalten wird. Das glasige Material kann insbesondere oxidisch ausgebildet sein. An den Schmelzprozess kann sich als weiterer Prozess eine sogenannte Heißformgebung anschließen, in welcher das glasige Material zu einem Formkörper geformt wird. Solche Formgebungsprozesse können beispielsweise Ziehen, Floaten oder Walzen sein.

Das Glassubstrat ist insbesondere scheibenförmig ausgebildet, wobei das Glassubstrat sowohl eben oder auch gewölbt, gewinkelt oder gebogen vorliegen kann. Unter einem scheibenförmigen Formkörper wird eine Ausbildung eines Körpers verstanden, bei welcher die laterale Abmessung des Formkörpers in einer ersten Raumrichtung eines kartesischen Koordinatensystems wenigstens eine Größenordnung geringer ist als in den beiden anderen, zu ersten Raumrichtung senkrechten Raumrichtungen. Diese erste Raumrichtung kann dabei auch als Dicke des Formkörpers bezeichnet werden. Mit anderen Worten ist ein Formkörper im Sinne der vorliegenden Offenbarung scheibenförmig ausgebildet, wenn seine Dicke wenigstens eine Größenordnung geringer ist als seine Länge und Breite. Weisen Länge und Breite des Formkörpers dieselbe Größenordnung auf, so kann der Formkörper auch als Scheibe bezeichnet werden, ist die Länge deutlich größer als die Breite, kann man auch von einem Band sprechen. Unter einem scheibenförmigen Glassubstrat wird hier daher insbesondere auch eine Glasscheibe verstanden, wobei die Glasscheibe sowohl eben als auch gewölbt oder gekrümmt oder gewinkelt ausgebildet sein kann, beispielsweise als gewölbte Sichtscheibe.

Da ein Glaselement ein veredeltes Glassubstrat ist, kann eine Oberfläche oder Hauptfläche eines Glassubstrats in entsprechender Weise auch als Oberfläche oder Hauptfläche des Glaselements bezeichnet werden. Die Ausführungen zu Länge, Breite und Dicke des Glassubstrats gelten daher für das Glaselement in entsprechender Weise, wobei hinsichtlich der Dicke beachtlich ist, dass die Dicke des Glaselements für einen beschichteten Bereich die Dicke des Glassubstrats zuzüglich der Dicke der Beschichtung ist. Aufgrund der nur sehr geringen Dicke der Beschichtung im Vergleich zur Dicke des Glassubstrats kann aber hier näherungsweise für praktische Belange die Dicke des Glassubstrats als gleich der Dicke des Glaselements betrachtet werden.

Unter den Oberflächen des Glassubstrats werden im Rahmen der vorliegenden Offenbarung die Hauptflächen bzw. Hauptoberflächen des Glassubstrats verstanden, welche beispielsweise auch als "Seiten" einer Scheiben (beispielsweise Vorderseite oder Rückseite) bezeichnet werden können. Mit anderen Worten handelt es sich bei den Oberflächen oder Hauptflächen oder Hauptoberflächen um diejenigen Flächen des Formkörpers, welche zusammen mehr als 50 % der Gesamtoberfläche des Formkörpers ausmachen. Nicht als Oberflächen werden im Rahmen der vorliegenden Offenbarung daher die Kantenflächen des Glassubstrats bezeichnet.

Die Oberflächen des scheibenförmigen Glassubstrats können insbesondere zumindest im Rahmen üblicher Fertigungstoleranzen parallel zueinander ausgebildet sein.

Unter dem Äquivalentdurchmesser eines Partikels wird im Rahmen der vorliegenden Offenbarung der volumenäquivalente Durchmesser verstanden. Er gibt an, welchen Durchmesser ein Partikel mit einem bestimmten Volumen hätte, wenn der Partikel perfekt kugelförmig ausgebildet wäre. Es handelt sich hierbei um eine übliche Größe zur Charakterisierung von Stoffen, welche üblicherweise in Partikelform vorliegen, wie beispielsweise von Pigmenten und/oder Füllstoffen. Sofern im Rahmen der vorliegenden Offenbarung eine Partikelgröße angegeben ist, wird darunter, sofern dies nicht ausdrücklich anders ausgeführt ist, eine Angabe des $d_{50}$-Werts, jeweils bezogen auf den Äquivalentdurchmesser, verstanden.

Im Rahmen der vorliegenden Offenbarung wird verstanden, dass ein Pigment ein Farbkörper ist, welcher üblicherweise in Partikelform vorliegt. Sofern daher im Rahmen der vorliegenden Offenbarung ausgeführt ist, dass eine Beschichtung ein Pigment umfasst, wird dies so verstanden, dass die Beschichtung Pigmentpartikel umfasst. Dies gilt in entsprechender Weise auch für den Füllstoff, welcher in Beschichtungen üblicherweise ebenfalls in Partikelform vorliegt. Ein einzelner Partikel eines Füllstoffs oder eines Pigments wird dabei zur Vermeidung von Missverständnissen als Füllstoff- oder Pigmentpartikel bezeichnet. Die Pigmente können dabei sowohl als Absorptionspigmente ausgebildet sein, also der Beschichtung eine Farbe verleihen aufgrund der selektiven Absorption von sichtbarem Licht, oder durch Lichtstreuung als Pigment wirken (dies ist üblicherweise bei Weißpigmenten der Fall) oder auch als sogenannte Effektpigmente ausgebildet sein, welche beispielsweise Farbwechsel (auch als Flop bezeichnet) und/oder einen sogenannten "metallic"-Effekt erzeugen. Im Rahmen der vorliegenden Offenbarung sind die Pigmente insbesondere anorganisch, vorzugsweise anorganisch und hochtemperaturstabil, also insbesondere stabil bis zu mindestens 500°C, ausgebildet. Solche Pigmente können auch als keramische Farbkörper oder keramische Pigmente bezeichnet werden.

Sofern im Rahmen der vorliegenden Offenbarung auf den thermischen Ausdehnungskoeffizienten eines Glases oder einer glasigen Komponente abgestellt wird, wird im Rahmen der vorliegenden Offenbarung der lineare thermische Ausdehnungskoeffizient, $\alpha$, verstanden, vorzugsweise angegeben im Bereich von 20°C bis 300°C. Beim angegebenen Wert für Gläser handelt es sich um den nominalen mittleren thermischen Längenausdehnungskoeffizienten, welcher für Gläser gemäß DIN ISO 7991 in statischer Messung bestimmt ist. Allgemein wird im Rahmen der vorliegenden Offenbarung unter dem thermischen Ausdehnungskoeffizienten der lineare thermische Ausdehnungskoeffizient, $\alpha$, verstanden und dieser wird vorzugsweise für den Bereich von 20°C bis 300°C angegeben. Die Bezeichnungen $\alpha$ und $\alpha_{20-300}$ werden im Rahmen dieser Schrift synonym verwendet. Der thermische Ausdehnungskoeffizient kann im Rahmen der vorliegenden Schrift auch als CTE (Coefficient of thermal expansion) bezeichnet werden. Für Pulver wird der thermische Ausdehnungskoeffizient üblicherweise bestimmt, indem das Pulver kompaktiert wird und anhand des so erhaltenen Formkörpers kann der Längenausdehnungskoeffizient in üblicher Weise durch Messung der Längenänderung in Abhängigkeit von der Temperatur bestimmt werden.

Es ist bekannt, dass der thermische Ausdehnungskoeffizient eines Gemisches, $\alpha_G$, nach der folgenden Formel berechnet werden kann:

$$\alpha_G = \sum_i v_i \times \alpha_i$$

Hierbei bezeichnet $\alpha_i$ den linearen thermischen Ausdehnungskoeffizienten der Komponente i und $v_i$ deren Volumenanteil. Das Volumen einer Komponente kann einfach durch Multiplikation mit der entsprechenden Dichte in die Masse umgerechnet werden. Mit anderen Worten wird also der Volumenanteil der einzelnen Komponenten mit dem thermischen Ausdehnungskoeffizienten der jeweiligen Komponenten multipliziert. Die daraus entstandenen Produkte werden dann addiert und ergeben so den resultierenden thermischen Ausdehnungskoeffizienten des betrachteten Gemischs, $\alpha_G$. Für die hier betrachtete anorganische glasbasierte Beschichtung sind diese Komponenten insbesondere wenigstens eine glasige Komponente, beispielsweise ein Glasfluss, wenigstens ein Pigment sowie wenigstens ein Füllstoff. In entsprechender Weise wie für die Beschichtung kann der resultierende thermische Ausdehnungskoeffizient $\alpha_G$ aus der Zusammensetzung eines Beschichtungsmittels bzw. Paste berechnet werden, indem der Berechnung die festen Komponenten des Beschichtungsmittels zugrunde gelegt werden.

Unter einem Beschichtungsmittel wird im Rahmen der vorliegenden Offenbarung ein flüssiges oder pastöses Material verstanden, welches dazu bestimmt ist, auf ein Substrat aufgebracht zu werden, sodass nach einem Trocknungs- und/oder Einbrennvorgang eine mit dem Substrat vorzugsweise fest verbundene Materiallage resultiert. Ein Beschichtungsmittel kann dabei auch als Dekorfarbe bezeichnet werden oder als Paste oder Emaillefarbe.

Eine Ausgestaltung des Glaselements nach Anspruch 1 ist vorteilhaft, weil durch die Verwendung eines anorganischen Füllstoffs und/oder einer weiteren glasigen Komponente eine hohe Temperaturstabilität der anorganischen Beschichtung erzielt werden kann. Wird ein Füllstoff verwendet, kann der Äquivalentdurchmesser des Füllstoffs bzw. der vom Füllstoff umfassten Füllstoffpartikel in einem weiten Bereich variieren. Dies ermöglicht es, den Füllstoff flexibel in Abhängigkeit von den zu erzielenden Eigenschaften und/oder den Füllstoff flexibel in Abhängigkeit von der Beschaffenheit der sonstigen Komponenten der Beschichtung auswählen zu können. So kann beispielsweise ein niedriger Äquivalentdurchmesser der Füllstoffpartikel dann vorteilhaft sein, wenn beispielsweise die glasige Komponente des Beschichtungsmittels auch Partikel mit einem geringen Äquivalentdurchmesser umfasst. Umfasst die Beschichtung bzw. das Beschichtungsmittel hingegen größere Partikel, beispielsweise ein Pigment, welches größere Partikel umfasst, kann es vorteilhaft sein, wenn der Äquivalentdurchmesser der Füllstoffpartikel größer ist. Gleichzeitig ist es mit einer solchen Ausgestaltung möglich, ein Glaselement mit erhöhter mechanischer Festigkeit im Vergleich zu herkömmlichen Glaselementen bereitzustellen. Dies kann insbesondere dadurch vorteilhaft unterstützt werden, dass vorzugsweise der resultierende thermische Ausdehnungskoeffizient der Beschichtung geringer ist als der thermische Ausdehnungskoeffizient des Glassubstrats. Auf diese Weise kann durch die Beschichtung sogar eine Art Druckspannung auf die Oberfläche des Glaselements erzielt bzw. ausgeübt, beispielsweise ähnlich einer thermischen Vorspannung, d.h. einer durch einen thermischen Prozess erhaltenen Vorspannung. Dies kann die Ausbildung einer verbesserten Festigkeit des Glaselements weiter unterstützen.

Vorteilhaft kann es auch sein, wenn alternativ oder zusätzlich zum Füllstoff eine weitere glasige Komponente als Bestandteil der Beschichtung zum Einsatz kommt. Beispielsweise kann dies gerade dann vorteilhaft sein, wenn große Pigmentpartikel verwendet werden, um so für eine bessere Umhüllung zu sorgen. Auch die Haftfestigkeit einer Beschichtung kann durch die Zugabe von einer weiteren glasigen Komponente alternativ oder zusätzlich zu einem Füllstoff verbessert werden, da auf diese Weise der Anteil der glasigen Matrix im Vergleich zum Partikelgehalt der Farbe, gebildet aus Pigmentpartikel und gegebenenfalls Füllstoffpartikeln, erhöht wird.

Mit einer Zusammensetzung der Beschichtung wie vorstehend ausgeführt ist es insbesondere möglich, dass eine besonders hohe mechanische Festigkeit des Glaselements erzielt wird.

Gemäß einer Ausführungsform ist das Glaselement so ausgestaltet, dass die Füllstoffpartikel und/oder die weitere glasige Komponente einen thermischen Ausdehnungskoeffizienten von mindestens $0{,}5*10^{-6}$/K und vorzugsweise höchstens $15*10^{-6}$/K, bevorzugt höchstens $10*10^{-6}$/K, $8*10^{-6}$/K, mehr bevorzugt höchstens $5*10^{-6}$/K, noch mehr bevorzugt höchstens $3*10^{-6}$/K und ganz besonders bevorzugt höchstens $0{,}6*10^{-6}$/K aufweisen. Mit anderen Worten weisen die Füllstoffpartikel bzw. weist der Füllstoff bzw. die weitere glasige Komponente also einen relativ geringen linearen thermischen Ausdehnungskoeffizienten auf, insbesondere im Vergleich mit üblichen glasigen Materialien, wie beispielsweise Borosilikatglas oder Kalk-Natron-Gläsern, deren lineare thermische Ausdehnungskoeffizienten mit mehr als $3{,}0*10^{-6}$/K deutlich höher liegen. Insbesondere beträgt der lineare thermische Ausdehnungskoeffizient für Kalk-Natron-Glas etwa $9*10^{-6}$/K und ist damit deutlich größer als der thermische Ausdehnungskoeffizient des Füllstoffs.

Dies kann insbesondere dann besonders vorteilhaft sein, wenn ein besonders niedriger resultierender thermischer Ausdehnungskoeffizient der Beschichtung erhalten werden soll. Denn es hat sich gezeigt, dass ein niedriger resultierender thermischer Ausdehnungskoeffizient einer glasbasierten Beschichtung zu einer verbesserten Festigkeit des Glaselements führen kann.

Allerdings ist es nicht in allen Fällen erforderlich oder sinnvoll, einen besonders niedrigen thermischen Ausdehnungskoeffizienten der glasbasierten Beschichtung zu erzielen. Vielmehr kann es sinnvoll sein, durch die Zugabe eines Füllstoffs umfassend Füllstoffpartikel und/oder einer weiteren glasigen Komponente mit einem niedrigen thermischen Ausdehnungskoeffizienten zwischen mindestens $0,5*10^{-6}$/K und vorzugsweise höchstens $15*10^{-6}$/K, bevorzugt höchstens $10*10^{-6}$/K, $8*10^{-6}$/K, mehr bevorzugt höchstens $5*10^{-6}$/K, noch mehr bevorzugt höchstens $3*10^{-6}$/K und ganz besonders bevorzugt höchstens $0,6*10^{-6}$/K den resultierenden thermischen Ausdehnungskoeffizienten der Beschichtung einzustellen. Vorzugsweise wird so ein resultierender thermischer Ausdehnungskoeffizient der Beschichtung von höchstens $9*10^{-6}$/K, bevorzugt $8,3*10^{-6}$/K erhalten, wobei vorzugsweise der resultierende thermische Ausdehnungskoeffizient der Beschichtung mindestens $6*10^{-6}$/K ist, besonders bevorzugt mindestens $6,4*10^{-6}$/K ist. Dies kann vorteilhaft sein, denn auf diese Weise wird eine Beschichtung erhalten, deren resultierender thermischer Ausdehnungskoeffizient auf übliche verwendete Substratmaterialien abgestimmt ist.

Gemäß einer Ausführungsform liegt der Unterschied der thermischen Ausdehnungskoeffizienten des Glassubstrats und der Beschichtung zwischen mindestens $0,5*10^{-6}$/K und höchstens $3,1*10^{-6}$/K liegt. Der thermische Ausdehnungskoeffizient der Beschichtung ist hierbei der resultierende thermische Ausdehnungskoeffizient der Beschichtung. Der Unterschied zwischen dem thermischen Ausdehnungskoeffizienten des Glassubstrats und dem resultierenden thermischen Ausdehnungskoeffizienten der Beschichtung ergibt sich als die Differenz des thermischen Ausdehnungskoeffizienten des Glassubstrats und des resultierenden thermischen Ausdehnungskoeffizienten der Beschichtung. Der resultierende thermische Ausdehnungskoeffizient ist also gemäß dieser Ausführungsform stets kleiner als der thermische Ausdehnungskoeffizient des glasigen Substratmaterials.

Mit anderen Worten ist gemäß einer bevorzugten Ausführungsform der Unterschied in den thermischen Ausdehnungskoeffizienten recht gering ausgeprägt. Es hat sich gezeigt, dass es auf diese Weise möglich ist, eine besonders gute mechanische Festigkeit des Glaselements zu erzielen, ohne dass es zu einer weiteren Beeinträchtigung der Eigenschaften des Glaselements kommt.

Zwar wäre es theoretisch möglich, dass der resultierende thermische Ausdehnungskoeffizient weiter verringert würde, indem der Anteil des Füllstoffs und/oder der weiteren glasigen Komponente in der Beschichtung erhöht würde. Damit wäre es theoretisch möglich, eine größere Druckspannung durch die Unterschiede der Ausdehnungskoeffizienten an der Oberfläche des Glaselements aufzubauen. Allerdings ist hierbei zu beachten, dass anders als eine Druckspannungszone in einem thermisch vorgespannten Glassubstrat die hier betrachtete Beschichtung heterogen aus mehreren Komponenten aufgebaut ist, welche jeweils unterschiedliche thermische Ausdehnungskoeffizienten aufweisen. Zwar kann der thermische Ausdehnungskoeffizient einzelner Bestandteile variiert werden, jedoch nur innerhalb bestimmter Grenzen. Auch sind gerade die thermischen Ausdehnungskoeffizienten von üblichen hochtemperaturstabilen Verbindungen, die als Pigmente verwendet werden, recht hoch.

Bei einer weiteren Erhöhung des Füllstoffgehalts und/oder des Gehalts der weiteren glasigen Komponente in der Beschichtung in der Form, dass ein nochmals geringer thermischer Ausdehnungskoeffizient der Beschichtung resultieren wurde, könnte es daher zu einer Rissbildung in der Beschichtung kommen. Auch kann der Anteil des Füllstoffs in der Beschichtung auf Kosten des Pigment- und/oder des glasigen Bestandteils nicht beliebig erhöht werden. Bei einem zu geringen Gehalt an Pigment in der Beschichtung kann es dazu kommen, dass die Beschichtung ihre Deckkraft verliert und/oder dass ein einzustellender Farbort nicht mehr erhalten werden kann. Auch der Anteil der glasigen Komponente kann nicht beliebig erhöht werden, da sonst eine nicht mehr ausreichende Deckkraft der Beschichtung resultierenden könnte. Dies ist beides unvorteilhaft. Denn die Deckwirkung und/oder die Einstellung des Farborts ist gerade für den Einsatz eines Glaselements in Anwendungen, in denen das Glaselements betrieblichen hohen thermischen Spannungen ausgesetzt ist, wie als Backofentürscheibe oder als Bedienblende eines Haushaltsgeräts, wichtig, beispielsweise, damit Bedien- und Gefahrenbereiche eines Geräts gut erkennbar abgegrenzt sind oder damit Sicherheitsleuchten, beispielsweise sogenannte Restwärmeanzeigen oder ähnliches, eindeutig bestimmten Bereichen zugeordnet werden können.

Auf der anderen Seite kann eine Verringerung der glasigen Komponente der Beschichtung dazu führen, dass die resultierende Beschichtung keine ausreichende Haftfestigkeit aufweist oder eine nur unzureichende mechanische Beständigkeit beispielsweise bei Abrasionsbelastungen. Denn die glasige Komponente in der Beschichtung wirkt als Bindemittel, welches bei Temperaturerwärmung aufschmilzt und die übrigen Komponenten der Beschichtung miteinander und mit dem Glassubstrat verbindet. Wird daher diese Komponente auf Kosten der anderen Komponenten zu sehr reduziert, kann dies zu den oben genannten negativen Folgen der beispielsweise nicht ausreichenden Kratzfestigkeit und/oder Abriebfestigkeit der Beschichtung führen.

Daher sollte der Unterschied in den thermischen Ausdehnungskoeffizienten des Glassubstrats und der Beschichtung wie ausgeführt vorzugsweise zwischen mindestens $0,5*10^{-6}$/K und höchstens $3,1*10^{-6}$/K liegen.

Gemäß einer Ausführungsform weist das Glaselement in dem Bereich, in welchem die Beschichtung angeordnet ist, einen Farbort mit einem L*-Wert von mehr als 60 und einer optischen Dichte von mehr als 1 auf oder einen Farbort von weniger als 60 und einer optischen Dichte von mehr als 2.

Gemäß einer Ausführungsform ist der Glasbestandteil des Bindemittels als Glasfluss oder Glasfritte ausgebildet und umfasst Zinkoxid und/oder Bismutoxid. Als besonders vorteilhaft haben sich hierbei Glasfritten mit einem Gehalt an Zinkoxid im Bereich von 0,1 bis 70 Gew.-% und insbesondere einen Zinkoxidgehalt im Bereich von 0,1 bis 30 Gew.-% erwiesen. Alternativ oder zusätzlich enthält die Glasfritte 0,1 bis 75 Gew.-% und insbesondere 8 bis 75 Gew.-% Bismutoxid. Der Gehalt an Zinkoxid bzw. Bismutoxid in den oben beschriebenen Ausführungsformen wirkt sich dabei insbesondere vorteilhaft auf die Erweichungstemperatur des Glases aus. Gemäß einer Weiterbildung dieser Ausführungsformen weisen die Glasfritten Erweichungstemperaturen im Bereich von 500 bis 950 °C. Bevorzugt ist die Erweichungstemperatur kleiner als 800 °C, oder sogar kleiner als 750 °C und besonders bevorzugt kleiner als 680 °C, jedoch mehr als 450°C auf. Durch die niedrigen Erweichungstemperaturen kann bereits bei geringen Einbrandtemperaturen die Ausbildung einer homogenen Glasmatrix aus dem Glaspulver erfolgen, insbesondere für den Fall, dass die Beschichtung bzw. das Beschichtungsmittel keine weitere glasige Komponente umfassen. Somit können Glassubstrate mit unterschiedlichen Zusammensetzungen (und somit unterschiedlichen Erweichungstemperaturen) mit der Paste beschichtet werden, ohne dass beim Einbrand die Viskosität des zu beschichtenden Glassubstrats bzw. des resultierenden Glaselements erniedrigt wird.

Zudem wird durch den Gehalt an Bismutoxid im Glas die chemische Resistenz der entsprechenden, d.h. der mit der Paste hergestellten, Beschichtung erhöht.

Da die Glasmatrix in der Beschichtung des beschichteten Substrates (bzw. des Elements) die gleiche Zusammensetzung wie das Glaspulver in der Paste aufweist, gelten die Angaben bezüglich der Zusammensetzung des Glaspulvers entsprechend auch für die Zusammensetzung der Glasmatrix in der Beschichtung in einigen Ausführungsformen bzw. Weiterbildungen. Dies gilt zumindest für den Fall, dass die Beschichtung bzw. das Beschichtungsmittel nur eine glasige Komponente umfassen. Umfasst allgemein das Beschichtungsmittel bzw. die Beschichtung eine weitere glasige Komponente, kann es allgemein sein, dass sich eine inhomogene Glasmatrix ausbildet. In diesem Fall wird auch allgemein ohne Beschränkung auf eine konkret beschriebene Ausführungsform, die Glasmatrix eine andere Zusammensetzung aufweisen als die glasige Komponente.

Gemäß einer Weiterbildung der Erfindung weist das Glaspulver in der Paste bzw. die Glasmatrix der entsprechenden Beschichtung zumindest für den Fall, dass die Beschichtung bzw. die Paste nicht noch eine weitere glasige Komponente umfasst, folgende Zusammensetzung in Gew.-% auf:

| | |
|---|---|
| $SiO_2$ | 30-75, bevorzugt 44-75 |
| $Al_2O_3$ | 0-25, bevorzugt 0,2-25, besonders bevorzugt 2-25 |
| $B_2O_3$ | 0-30, bevorzugt 1-30, besonders bevorzugt 5-30 |
| $Li_2O$ | 0-12 |
| $Na_2O$ | 0-25, bevorzugt 0-15 |
| CaO | 0-12 |
| MgO | 0-9 |
| BaO | 0-27 |
| SrO | 0-4 |
| ZnO | 0-35, bevorzugt 0-20 |
| $Bi_2O_3$ | 0-5 |
| $TiO_2$ | 0-10, bevorzugt 0-5 |
| $ZrO_2$ | 0-7 |
| $AS_2O_3$ | 0-1 |
| $Sb_2O_3$ | 0-1,5 |
| F | 0-3 |
| Cl | 0-1, bevorzugt bis auf unvermeidliche Spuren frei von Cl |
| $H_2O$ | 0-3. |

Bevorzugt weist das Glas der glasigen Komponente einen Mindestgehalt an $Al_2O_3$ von 0,2 Gew.-%, bevorzugt von mindestens 2 Gew.-% auf. Alternativ oder zusätzlich weist das Glas einen Gehalt von $B_2O_3$ von zumindest 1 Gew.-%, bevorzugt mindestens 5 Gew.-% auf.

Es hat sich weiterhin als vorteilhaft herausgestellt, wenn das Glas der glasigen Komponente mindestens 1 Gew.-% eines Alkalioxides, ausgewählt aus der Gruppe von $Na_2O$, $Li_2O$ und $K_2O$ oder Mischungen dieser Oxide enthält.

Alternativ oder zusätzlich umfasst das Glas der glasigen Komponente mindestens 1 Gew.-% eines weiteren Oxids oder einer Mischung von Oxiden, ausgewählt aus der Gruppe von CaO, MgO, BaO, SrO, ZnO, ZrO$_2$, und TiO$_2$.

Gemäß einer anderen Weiterbildung weist das Glas der glasigen Komponente folgende Zusammensetzung in Gew.-% auf:

| | |
|---|---|
| SiO$_2$ | 6-65, bevorzugt 10-65, besonders bevorzugt 15-65 |
| Al$_2$O$_3$ | 0-20 |
| B$_2$O$_3$ | 0-40, bevorzugt 1-30, besonders bevorzugt 3-30 |
| Li$_2$O | 0-12 |
| Na$_2$O | 0-18 |
| K$_2$O | 0-17 |
| CaO | 0-17 |
| MgO | 0-12 |
| BaO | 0-38 |
| SrO | 0-16 |
| ZnO | 0-70 |
| TiO$_2$ | 0-10, bevorzugt 0-5 |
| ZrO$_2$ | 0-5 |
| Bi$_2$O$_3$ | 0-75, bevorzugt 0-60, bevorzugt 5-60, besonders bevorzugt 10-60 |
| CoO | 0-5 |
| Fe$_2$O$_3$ | 0-5 |
| | |
| CeO$_2$ | 0-3 |
| F | 0-3 |
| Cl | 0-1 |
| H$_2$O | 0-3. |

In einer bevorzugten Ausführungsform der Weiterbildung weist das Glas der glasigen Komponente einen Mindestgehalt an SiO$_2$ von 10 Gew.-%, bevorzugt von mindestens 15 Gew.-% auf. Alternativ oder zusätzlich weist das Glas einen Mindestgehalt an Bi$_2$O$_3$ von 5 Gew.-%, bevorzugt von mindestens 10 Gew.-% auf. Alternativ oder zusätzlich enthält das Glas zumindest 1 Gew.-%, bevorzugt zumindest 3 Gew.-% B$_2$O$_3$. Vorzugsweise beträgt der Gesamtgehalt der Alkalioxide Na$_2$O, Li$_2$O und K$_2$O zumindest 1 Gew.-%.

Das in der Paste enthaltene Glas bzw. die Glasmatrix in der entsprechenden Beschichtung (insbesondere für den Fall, dass die Paste bzw. die resultierende Beschichtung keine weitere glasige Komponente aufweist) kann insbesondere ein alkalifreies Glas, ein alkalihaltiges Glas, ein Silikatglas, ein Borosilikatglas, ein Zinksilikatglas, ein Zinkboratglas, ein Zinkborsilikatglas, ein Bismutborsilikatglas, ein Bismutboratglas, ein Bismutsilikatglas, ein Phosphatglas, ein Zinkphosphatglas, ein Aluminosilikatglas oder ein Lithiumaluminosilikatglas sein. Gemäß einer Ausführungsform der Erfindung weist die Paste Glaspulver mit unterschiedlichen Glaszusammensetzungen auf.

Gemäß einer Ausführungsform ist der Gehalt der toxikologisch bedenklichen Komponenten Blei, Cadmium, Quecksilber und/oder Chrom(VII)-Verbindungen im Glas kleiner 500 ppm.

Gemäß einer weiteren Ausführungsform umfasst das Glassubstrat ein Kalk-Natron-Glas. Insbesondere ist es möglich, dass das Glassubstrat als Kalk-Natron-Glasscheibe ausgebildet ist oder aus Kalk-Natron-Glas ausgebildet ist.

Kalk-Natron-Glas umfasst als Hauptbestandteile in Gewichtsprozent auf Oxidbasis die Komponenten CaO, Na$_2$O und SiO$_2$ und ist ein weitverbreitetes Glas. Als Hauptbestandteile werden dabei Komponenten bezeichnet, welche zu mindestens 5 Gew.-% im glasigen Material enthalten sind. Glassubstrate aus oder umfassend Kalk-Natron-Glas sind daher in der Regel kostengünstig und in ausreichender Menge verfügbar. Allerdings weist Kalk-Natron-Glas einen recht hohen thermischen Ausdehnungskoeffizienten auf, was nachteilig beispielsweise in Anwendungen ist, in denen ein Glassubstrat oder Glaselement betrieblich hohen thermischen Spannungen ausgesetzt ist.

Gerade die Kombination von Kalk-Natron-Glas als vom Glassubstrat umfasstes glasiges Material und der Beschichtung nach hier beschrieben Ausführungsformen stellt allerdings auf überraschende Weise eine Möglichkeit dar, einen Kompromiss zwischen einem kostengünstigen und hoch verfügbaren Substratmaterial und einer ausreichenden Thermoschockbeständigkeit zu erzielen. Denn wie ausgeführt kann die Beschichtung nach Ausführungsformen eine gewisse Druckspannung an der Oberfläche des Glaselements aufbauen. Auf diese Weise ist es daher auch möglich, eine thermische Vorspannung (also eine durch einen thermischen Prozess erzielte Vorspannung) eines Glassubstrats bzw. Glaselements durch die Beschichtung weiter vorteilhaft zu unterstützen.

Gemäß einer Ausführungsform ist das Glaselements gekennzeichnet durch eine Bruchfestigkeit, bestimmt in einem Kugelfalltest von mindestens 70 cm oder mindestens 28 Zoll, vorzugsweise von mindestens 80 cm oder von mindestens 31 Zoll, bezogen auf eine Dicke des Glassubstrats von 4 mm. Das Testverfahren wird in Anlehnung an das Testverfahren nach der DIN 52306 durchgeführt, wobei wie folgt vorgegangen wird:

Der beschichtete Prüfling wird auf einen rechteckigen Rahmen aufgelegt, wobei der Rahmen ein Metallrahmen ist, auf welchen jeweils ein Gummi als Unterlage platziert ist, sodass ein direkter Kontakt zwischen der Glasprobe und dem Metallrahmen vermieden wird. Eine Metallkugel mit einem Gewicht von etwa 535 g und einem Durchmesser von etwa 50,8 mm wird von einer initialen Fallhöhe von 26 Zoll (entsprechend etwa 66 cm) fallen gelassen. Die Fallhöhe wird sodann in Schritten von einem Zoll erhöht, bis Glasbruch eintritt. Die Fallhöhe, bei der Bruch eintritt, wird notiert. Der Test wird für weitere Proben in entsprechender Weise durchgeführt, wobei aus statistischen Gründen vorzugsweise mindestens 30 Proben getestet werden. Beim angegebenen Wert der Bruchfestigkeit handelt es sich um den Durchschnittswert der Fallhöhen, bei denen Bruch eintritt.

Insbesondere können die Proben vorgespannt vorliegen bzw. liegen vorgespannt vor.

Eine solche Ausgestaltung ist ganz besonders vorteilhaft. Denn es hat sich gezeigt, dass mit einem Glaselement nach vorliegenden beschriebenen Ausführungsformen Bruchfestigkeiten, bestimmt in einem Kugelfalltest wie vorstehend beschrieben, erhalten werden können, welche um bis zu 30 % über den Werten liegen, welche für Glaselemente des Standes der Technik erzielt werden.

Daher ist es mit dem Glaselement nach Ausführungsformen der vorliegenden Offenbarung möglich, Anwendungen zu adressieren, bei denen eine erhöhte Festigkeit erforderlich ist. Alternativ ist es auch möglich, die Substratdicke des Glaselements zu verringern bei gleichbleibender mechanische Festigkeit des Glaselements im Vergleich zu einem herkömmlichen Glaselement.

Gemäß einer Ausführungsform umfassen die Füllstoffpartikel $SiO_2$ und/oder $Al_2O_3$. $SiO_2$ und $Al_2O_3$ sind jeweils Oxide, welche eine sehr hohe Temperaturstabilität aufweisen und daher als Füllstoffe für die Beschichtung nach Ausführungsformen geeignet sind, da sie insbesondere bei Einbrandtemperaturen, wie sie für glasbasierte Beschichtungen üblich sind, thermisch beständig sind. Darüber hinaus handelt es sich auch um unter Umwelt- und Gesundheitsgesichtspunkten unbedenkliche Stoffe, die weiterhin auch eine gute Verfügbarkeit aufweisen. Beide Verbindungen sind farblos, sodass die Auswirkungen auf den Farbort der Beschichtung bei den bevorzugten Gewichtsanteilen des Füllstoffs in der Beschichtung eher gering ist.

$SiO_2$ und $Al_2O_3$ kommen jeweils in unterschiedlichen Modifikationen, sowohl kristallin als auch amorph, vor, sodass es möglich ist, mit diesen Komponenten den thermischen Ausdehnungskoeffizienten des Füllstoffs in einem weiten Bereich zu variieren. Es ist auch möglich, dass der Füllstoff eine Verbindung oder eine feste Mischung von $SiO_2$ und $Al_2O_3$ umfasst, beispielsweise in Form von Mullit.

Gemäß einer besonders bevorzugten Variante umfasst der Füllstoff Kieselsäure, also amorphes $SiO_2$, beispielsweise in Form sogenannter pyrogener Kieselsäure (oder fumed silica) oder besteht überwiegend, also zu mehr als 50 Gew.-%, oder im Wesentlichen, also zu mehr als 90 Gew.-%, oder bis auf unvermeidliche Verunreinigungen oder sogar vollständig aus Kieselsäure. Kieselsäure kann besonders bevorzugt sein, weil sie einen sehr geringen thermischen Ausdehnungskoeffizienten von etwa $0,5*10^{-6}$/K aufweist. Vorzugsweise kann der Füllstoff in Form von pyrogener Kieselsäure umfassend Partikel mit einem $d_{50}$-Wert der Partikelgrößenverteilung, bezogen auf den Äquivalentdurchmesser, zwischen 0,3 und 0,5 $\mu$m, beispielsweise von 0,4 $\mu$m, ausgebildet sein.

Alternativ oder zusätzlich zum Füllstoff kann beispielsweise die Beschichtung eine weitere glasige Komponente umfassen, beispielsweise ein Borosilikatglas, oder aus eine Glas, wie einem Borosilikatglas, ausgebildet sein. Beispielsweise kann die weitere glasige Komponente ein Glas umfassend die folgenden Komponenten in Mol-% auf Oxidbasis umfassen:

| | |
|---|---|
| $SiO_2$ | 55 bis 70 mol%, |
| $Al_2O_3$ | 2,5 bis 8 mol%, |
| $Bi_2O_3$ | 0,5 bis weniger als 4 mol%, |
| $B_2O_3$ | 14 bis 27 mol%, |

mit mindestens 2,5 mol% von mindestens einem Oxid der Gruppe $Li_2O$, $Na_2O$ und $K_2O$, wobei das Verhältnis von Alkalioxiden zu Aluminiumoxid $\Sigma R_2O/Al_2O_3$ kleiner als 6 ist.

Beispielsweise kann die weitere glasige Komponente in diesem Fall die folgende Zusammensetzung in Gew.-% auf Oxidbasis aufweisen:

| | |
|---|---|
| $Al_2O_3$ | 6,0 |
| $Bi_2O_3$ | 9,2 |
| $SiO_2$ | 57,4 |
| $Na_2O$ | 0,21 |
| $Li_2O$ | 4,1 |
| $B_2O_3$ | 22,6. |

Allgemein kann es vorteilhaft sein, dass der Füllstoff Füllstoffpartikel mit einen $d_{50}$-Wert des Äquivalentdurchmessers von 5 $\mu$m oder weniger umfasst. da auch die weitere glasige Komponente der Paste zunächst als Pulver zugesetzt wird, gelten die vorstehend genannten Werte für den Äquivalentdurchmesser auch für die weitere glasige Komponente. Vorteilhaft ist dies dann, wenn die weitere glasige Komponente so ausgebildet ist, dass sie ein glasiges Material umfasst, welches insbesondere in einem Prozess erhalten wird, der die Schmelze eines Gemenges sowie einen Zerkleinerungsprozess des erhaltenen glasigen Materials umfasst. In einem solchen Prozess lassen sich sehr kleine, feine Partikel nicht mehr wirtschaftlich herstellen, sodass es bevorzugt ist, keine zu kleinen Partikelgrößen für ein solches, glasiges Material anzustreben.

Gemäß einer Ausführungsform kann es vorgesehen sein, dass die Beschichtung zwei oder sogar mehr unterschiedliche Füllstoffe umfasst, wobei beispielsweise die Partikelgrößenverteilungen voneinander abweichen können. Auf diese Weise kann möglicherweise ein besonders günstiges Gefüge in der Beschichtung resultieren, beispielsweise ein Gefüge mit hoher Packungsdichte. Alternativ oder zusätzlich ist es möglich, dass die Beschichtung zusätzlich zu dem Füllstoff oder den Füllstoffen eine weitere glasige Komponente umfasst.

Gemäß einer weiteren Ausführungsform ist die Beschichtung lateral strukturiert angeordnet, sodass ein Bereich der Oberfläche des Glaselements, auf welcher die Beschichtung angeordnet ist, keine Beschichtung aufweist, und ein anderer Bereich die Beschichtung aufweist. Dabei kann die Beschichtung vorzugsweise in Form eines Rasters, wie eines Punktrasters, und/oder eines Rahmens aufgebracht sein. Unter einem Raster ist hierbei eine Anordnung von Punkten zu verstehen, die regelmäßig über eine Fläche verteilt sind, und beispielsweise als die Eckpunkte von sich kreuzenden rechtwinkligen Linien eines Gitters verstanden werden können. Im Rahmen der vorliegenden Offenbarung ist es dabei möglich, dass sich bei einem Punktraster die Größe der Punkte und/oder die Dichte der Punkte auf der zu beschichtenden Fläche graduell oder abschnittsweise ändert.

Es ist beispielsweise möglich und kann auch bevorzugt sein, dass die Beschichtung in einem Randbereich einer Oberfläche des Glassubstrats in Form eines Rahmens deckend aufgebracht ist und zur Mitte der Oberfläche hin die Belegung der Oberfläche mit der Beschichtung abnimmt und der Rahmen in ein Punktraster mit einem zunächst hohen Belegungsgrad übergeht und zur Mitte hin das Raster sich dahingehend ändert, dass der Belegungsgrad des Punktrasters abnimmt. Unter dem Belegungsgrad wird hierbei das Verhältnis der Fläche des beschichteten Bereichs bzw. der beschichteten Bereiche der Oberfläche des Glassubstrats bzw. des Glaselements zur Gesamtfläche der Oberfläche des Glassubstrats bezeichnet.

Das Vorliegen der Beschichtung als Rahmen kann dabei besonders bevorzugt sein, da beispielsweise auf diese Weise der direkte Kontakt der Glasoberfläche mit scharfkantigen oder abrasiven Gegenständen oder Bauteilen in einem Einbauzustand des Glaselements - beispielsweise also mit einem Metallrahmen oder metallischen Bauteilen als Halterungselementen - zumindest teilweise gemindert oder reduziert werden kann. Im Randbereich kann also die Beschichtung dann als eine Art Kratzschutzbeschichtung wirken. Da Kratzer in der Oberfläche eines Glassubstrats oder Glaselements dessen mechanische Festigkeit verringern, ist eine Ausgestaltung des Glaselements, bei der die Beschichtung im Randbereich einen Rahmen bildet, somit vorteilhaft.

Auch in den übrigen Bereichen des Glaselements kann die Beschichtung noch als Kratz- oder Verschleißschutzbeschichtung wirken. Die mit der Beschichtung belegten Bereiche der Oberfläche des Glaselements sind nämlich im Vergleich zu den unbelegten Bereichen etwas erhöht, sodass die Beschichtung in diesem Fall als eine Art Abstandshalter zur Glasoberfläche wirkt. Kratzer auf der Glasoberfläche können so zwar nicht vollständig verhindert, aber zumindest etwas vermindert werden. Allerdings sollte der Belegungsgrad im mittleren Bereich des Glaselements nicht zu hoch sein, da beispielsweise solche beschichteten Glaselemente auch als Sichtscheibe, beispielsweise in einer Backofentür, verwendet werden können. Hier muss also ein Kompromiss zwischen einer ausreichenden Belegung zur möglichst gezielten Verminderungen von Oberflächenbeschädigungen und ausreichend freier Oberfläche zur Ermöglichung der Durchsicht durch das Glaselement gefunden werden.

Vorzugsweise beträgt der Belegungsgrad mindestens 60%, vorzugsweise mindestens 65 % und besonders bevorzugt mindestens 70%. Der Belegungsgrad sollte vorzugsweise nicht größer als 90% sein. Allgemein ist aber auch eine vollflächige Beschichtung möglich, insbesondere für den Fall, dass das Glaselement als eine opake Scheibe oder Abdeckung verwendet werden soll.

Gemäß einer weiteren Ausführungsform weist das Glaselement eine Dicke zwischen 3 mm und 10 mm auf.

Die Dicke des Glaselements bezieht sich hier auf die laterale Abmessung des Glaselements, welche durch den Abstand der beiden Oberflächen oder Hauptflächen gegeben ist, ohne Berücksichtigung der Dicke der Beschichtung. Mithin entspricht die Dicke des Glaselements der Dicke des Glassubstrats. In der praktischen Bestimmung der Dicke des Glaselements ist es aber wegen der im Vergleich zur Dicke des Glassubstrats geringen Schichtdicke näherungsweise möglich, die Dicke des Glaselements auch in einem beschichteten Bereich zu bestimmen, beispielsweise also im Randbereich des Glaselements, in welchem die Beschichtung in Form eines Rahmens aufgebracht ist, zu bestimmen.

Die Dicke des Glaselements sollte mindestens 3 mm betragen. Bei einer geringeren Dicke des Glaselements bzw. -substrats ist die mechanische Festigkeit des Glassubstrats oder Glaselements zu gering, sodass es für viele Anwendungen, beispielsweise als Bedienblende oder als Sichtscheibe in Backofentüren, nicht geeignet ist. Allerdings sollte die Dicke des Glassubstrats bzw. -elements auch nicht zu groß sein. Denn eine höhere Dicke führt zwar zu einer Erhöhung der mechanischen Festigkeit, allerdings erhöht sich auch das Gewicht des Glaselements/-substrats. Weiterhin steigen die Materialkosten. Die Dicke des Glaselements bzw. -substrats ist daher vorzugsweise begrenzt und beträgt gemäß einer Ausführungsform nicht mehr als 10 mm.

Gemäß einer weiteren Ausführungsform weist die Beschichtung eine Dicke bis zu 20 $\mu$m, bevorzugt von bis zu 10 $\mu$m, auf. Insbesondere kann die Nassschichtdicke, also die Schichtdicke vor Einbrand, bis zu 20 $\mu$m betragen. Die Beschichtung ist vorzugsweise wenigstens 1 $\mu$m dick.

Die Dicke der Beschichtung sollte mindestens 1 $\mu$m betragen. Auf diese Weise ist sichergestellt, dass die Beschichtung eine hinreichende Deckkraft aufweist. Auch kann auf diese Weise die Beschichtung vorteilhaft die Funktion einer zumindest teilweise Verschleiß mindernden Beschichtung erfüllen, also beispielsweise als eine Art "mechanischer Abstandshalter" wirken und den direkten Kontakt eines abrasiven Gegenstands mit der unbeschichteten Oberfläche des Glaselements bzw. Glassubstrats zumindest teilweise verringern.

Die Beschichtung sollte aber keine zu große Dicke aufweisen. So ist bekannt, dass eine zu große Dicke der Beschichtung die mechanische Festigkeit eines Glaselements verringern kann. Hohe Schichtdicken einer Beschichtung können auch dazu führen, dass es zu Abplatzungen kommt. Die Dicke der Beschichtung ist daher vorzugsweise begrenzt und beträgt bevorzugt nicht mehr als 20 $\mu$m, insbesondere nicht mehr als 10 $\mu$m.

Die Paste ist dabei vorzugsweise so ausgestaltet, dass sie in üblichen Verfahren zum Auftrag auf ein Glassubstrat verwendet werden kann, insbesondere mittels Siebdruck. Auch die Einbrandbedingungen ändern sich vorzugsweise nicht gegenüber denen herkömmlicher Pasten, welche keinen Füllstoff umfassen. Insbesondere ist es möglich, dass der Einbrand der Beschichtung während des thermischen Vorspannens des Glaselements erfolgt.

Ein weiterer Aspekt betrifft ein Beschichtungsmittel (oder auch eine Paste oder Emaillefarbe) zur Herstellung einer anorganischen glasbasierten Beschichtung, vorzugsweise einer Emaillebeschichtung, auf einem Glassubstrat. Das Beschichtungsmittel umfasst feste Komponenten, die einen Feststoffanteil des Beschichtungsmittels definieren, sowie wenigstens eine flüssige Komponente, beispielsweise ein Lösungsmittel. Die festen Komponenten umfassen

- wenigstens eine glasige Komponente,
- wenigstens ein Pigment umfassend Pigmentpartikel,
- wenigstens einen Füllstoff umfassend Füllstoffpartikel,

wobei der Füllstoff anorganisch ausgebildet ist und Füllstoffpartikel mit einem $d_{50}$-Wert, bezogen auf den Äquivalentdurchmesser, zwischen mindestens 0,1 $\mu$m, bevorzugt mindestens 0,3 $\mu$m, und weniger als 10 $\mu$m umfasst und alternativ oder zusätzlich zu dem wenigstens einen Füllstoff eine weitere glasige Komponente.

Gemäß einer Ausführungsform liegt das Verhältnis der Summe der Feststoffbestandteile und der Summe der flüssigen Bestandteile des Beschichtungsmittels zwischen 2 und 3,5, bezogen auf das Gewicht, bevorzugt zwischen 2,2 und 3,1.Eine solche Ausgestaltung ist vorteilhaft, da auf diese Weise eine gute Verarbeitbarkeit des Beschichtungsmittels gewährleistet ist. Dieses lässt sich gut auftragen und fließt gut, ist aber andererseits auch nicht zu dünnflüssig, sodass insbesondere ein Schichtauftrag mittels eines Druckverfahrens, beispielsweise Siebdruck, möglich ist.

Gemäß einer Ausführungsform beträgt der Anteil der glasigen Komponente am Feststoffanteil des Beschichtungsmittels zwischen 58 Vol.-% und 78 Vol.-%, bevorzugt höchstens 73 Vol.-%.

Eine solche Ausführungsform ist vorteilhaft, denn die glasige Komponente, die auch als Glasfluss bezeichnet werden kann, wirkt in der Beschichtung als Bindemittel. Mit anderen Worten schmilzt die glasige Komponente des Beschichtungsmittels beim Einbrand zumindest teilweise auf und verbindet die weiteren Komponenten des Beschichtungsmittels bzw. der Beschichtung miteinander und mit dem Glassubstrat. Es ist dabei möglich, dass die glasige Komponente die weiteren Komponenten des Feststoffanteils des Beschichtungsmittels und/oder das Glassubstrat zumindest in einem Oberflächenbereich zumindest teilweise anschmilzt, sodass sich an der Grenzfläche Beschichtung/Glassubstrat eine sogenannte Anschmelz-Reaktionszone ausbildet. Dies kann vorteilhaft sein, da auf diese Weise eine besonders gute Haftung der Beschichtung auf dem Glassubstrat erzielt werden kann. Der Gehalt des Beschichtungsmittels an der glasigen Komponente, beispielsweise dem Glasfluss, sollte daher wenigstens 32 Gew.-% betragen, damit eine ausreichende Benetzung und Umhüllung der weiteren Feststoffkomponenten des Beschichtungsmittels möglich ist.

Andererseits sollte der Gehalt des Beschichtungsmittels an der glasigen Komponente aber nicht zu hoch sein. Denn es hat sich gezeigt, dass ein zu hoher Anteil an Glasfluss in einer Beschichtung dazu führen kann, dass die mechanische Festigkeit des Glaselements verringert wird. Gerade bei der Ausbildung einer Anschmelz-Reaktionszone kann es dazu kommen, dass sich im Bereich der Grenzfläche Risse bilden, welche die Festigkeit des Glassubstrats entsprechend erniedrigen. Die Ausbildung der Risse kann vermindert werden, wenn der Gehalt des Beschichtungsmittels - und in entsprechender Weise auch der aus dem Beschichtungsmittel resultierenden Beschichtung - begrenzt wird. Vorteilhaft beträgt daher gemäß einer Ausführungsform der Gehalt des Beschichtungsmittels bzw. in entsprechender Weise der aus dem Beschichtungsmittel nach dem Einbrand auf dem Glassubstrat bzw. Glaselement resultierenden Beschichtung an glasiger Komponente höchstens etwa 45 Gew.-% bzw. höchstens etwa 50 Vol.-%.

Die glasige Komponente liegt im Beschichtungsmittel als Pulver vor, vorzugsweise umfassend Glaspulverpartikel mit einem $d_{50}$-Wert, bezogen auf den Äquivalentdurchmesser, von 1 μm bis 5 μm. Ein solcher Korngrößenbereich ist vorteilhaft, weil auf diese Weise ein gleichmäßiges Aufschmelzen des Glaspulvers ermöglichst wird. Dies gilt in entsprechender Weise auch für die weitere glasige Komponente, sollte das Beschichtungsmittel eine weitere glasige Komponenten alternativ oder zusätzlich zu dem wenigstens einen Füllstoff umfassen.

Gemäß einer weiteren Ausführungsform beträgt der Anteil des Pigments am Feststoffanteil zwischen 5 Vol.-% und 35 Vol.-%, bevorzugt zwischen 5 Vol.-% und 21 Vol.-%. Beispielsweise kann der Pigmentanteil zwischen 10 Vol.-% und 19 Vol.-% liegen. Das Pigment ist farbgebende Komponente in der durch Einbrand aus dem Beschichtungsmittel resultierenden Beschichtung auf dem Glaselement bzw. Glassubstrat. Um eine ausreichende Deckkraft der Beschichtung zu erzielen, sollte der Anteil des Pigments am Feststoffanteil der Beschichtung wenigstens 5 Vol.-% betragen bzw. die Beschichtung in entsprechender Weise wenigstens 5 Vol.-% umfassen. Auf der anderen Seite stellen die farbgebenden Pigmente in der Regel kostenintensive Bestandteile dar, sodass der Anteil des Pigments am Feststoffanteil der Beschichtung nicht zu hoch sein bzw. die Beschichtung in entsprechender Weise nicht zu viel Pigment umfassen sollte. Der Pigmentgehalt des Feststoffanteils des Beschichtungsmittels ist daher vorzugsweise begrenzt und beträgt gemäß einer Ausführungsform nicht mehr als 35 Vol.-%, vorzugsweise nicht mehr als 21 Vol.-%. In entsprechender Weise umfasst die Beschichtung höchstens 35 Vol.-% Pigment, vorzugsweise höchstens 21 Vol.-% Pigment. Bevorzugt sind anorganische Pigmente, welche eine hohe Temperaturbeständigkeit aufweisen, beispielsweise Pigmente mit Spinell-struktur und $TiO_2$.

Gemäß einer weiteren Ausführungsform beträgt der Anteil des Füllstoffs und/oder der weiteren glasigen Komponente am Feststoffanteil des Beschichtungsmittels zwischen insgesamt 0,01 Vol.-% und 60 Vol.-%, vorzugsweise höchstens 35 Vol.-%, besonders bevorzugt höchstens 19 Vol.-% und ganz besonders bevorzugt höchstens 15 Vol.-%. Insbesondere kann der Anteil des Füllstoffs und/oder der weiteren glasigen Komponente auch insgesamt höchstens 10 Vol.-% oder weniger betragen. Bereits mit geringen Füllstoffgehalten und/oder einem geringen Gehalt an der weiteren glasigen Komponente im Beschichtungsmittel bzw. in der resultierenden Beschichtung können vorteilhafte Effekte, beispielsweise hinsichtlich der resultierenden mechanischen Festigkeit des Glaselements, erzielt werden. Es kann jedoch vorteilhaft sein, wenn der Füllstoff bzw. die weitere glasige Komponente wenigstens 0,5 Vol.-% des Feststoffanteils des Beschichtungsmittels ausmacht. Umgekehrt ist es vorteilhaft, wenn der Füllstoffanteil bzw. der Anteil der weiteren glasigen Komponente nicht zu hoch liegt. Denn sonst wird eine nicht mehr ausreichende Haftfestigkeit und/oder Deckkraft der Beschichtung resultieren. Daher sollte der Füllstoffgehalt bzw. der Gehalt der weiteren glasigen Komponente am Feststoffanteil des Beschichtungsmittels insgesamt, also in Summe, höchstens 60 Vol.-% betragen, vorzugsweise höchstens 35 Vol.-% besonders bevorzugt höchstens 19 Vol.-% und ganz besonders bevorzugt höchstens 15 Vol.-%, beispielsweise 10 Vol.-% oder sogar weniger.

Sofern das Beschichtungsmittel mehr als einen Füllstoff umfasst bzw. Füllstoff und eine weitere glasige Komponente, beziehen sich die vorstehenden Angaben zum Feststoffgehalt jeweils auf die Summe dieser zusätzlichen Komponenten.

Ein besonderer Vorteil des Beschichtungsmittels nach der vorliegenden Offenbarung ist es, dass es damit überraschend auf sehr einfache Weise möglich ist, unter Kenntnis der thermischen Ausdehnungskoeffizienten der einzelnen Bestandteile des Beschichtungsmittels möglich ist, den resultierenden thermischen Ausdehnungskoeffizienten der Beschichtung zu beeinflussen. Es ist beispielsweise möglich, eine kommerziell erhältliche Emaille- oder Druckfarbe umfassend einen Glasfluss und ein Pigment durch Zusatz eines entsprechenden Füllstoffs und/oder einer entsprechenden weiteren glasigen Komponente zu modifizieren, sodass mit diesem resultierenden Beschichtungsmittel dann ein Glaselement nach Ausführungsformen erhalten werden kann.

Dies erfolgt über die bereits weiter oben eingeführte Formel zur Berechnung des resultierenden thermischen Ausdehnungskoeffizienten eines Gemischs, $\alpha_G$:

$$\alpha_G = \sum_i v_i \times \alpha_i$$

Zur Berechnung des resultierenden thermischen Ausdehnungskoeffizienten wird der Volumenanteil der einzelnen Komponenten des Feststoffanteils, nämlich Pigment bzw. gegebenenfalls Pigmente, glasige Komponente (auch als Glasfluss oder Glasfritte bezeichnet) und Füllstoff bzw. gegebenenfalls Füllstoffe bzw. alternativ oder zusätzlich zu dem oder den Füllstoffen die weitere glasige Komponente mit dem jeweiligen thermischen Ausdehnungskoeffizienten multipliziert.

Es hat sich gezeigt, dass es beispielsweise bei Verwendung einer kommerziell erhältlichen Emaillefarbe auf einfache Weise möglich ist, durch die Zugabe eines Füllstoffs oder auch gegebenenfalls mehrerer Füllstoffe oder eines Füllstoffgemischs und/oder einer weiteren glasigen Komponente ein Beschichtungsmittel nach Ausführungsformen der vorliegenden Offenbarung zu erhalten. Dabei ist es unter Heranziehung der oben aufgeführten Formel zur Berechnung des resultierenden thermischen Ausdehnungskoeffizienten der Beschichtung möglich, diesen mit einem Füllstoff oder mehreren Füllstoffen oder alternativ oder zusätzlich einer weiteren glasigen Komponente gezielt einzustellen, wenn Volumenanteile und thermische Ausdehnungskoeffizienten der in der kommerziellen Emaillefarbe enthaltenen Komponenten bekannt sind.

Die vorliegende Offenbarung betrifft daher auch ein Verfahren zur Herstellung eines Beschichtungsmittels umfassend wenigstens eine Pigment umfassend Pigmentpartikel, wenigstens eine glasige Komponente sowie wenigstens einen Füllstoff umfassend Füllstoffpartikel oder alternativ oder zusätzlich eine weitere glasige Komponente, umfassend die Schritte

- Bereitstellen eines Beschichtungsmittels umfassend eine glasige Komponente und wenigstens ein Pigment umfassend Pigmentpartikel
- Festlegen des resultierenden thermischen Ausdehnungskoeffizienten der aus dem Beschichtungsmittels durch Einbrand auf einem Substrat erhaltenen Beschichtung
- Bereitstellen eines Füllstoffs umfassend Füllstoffpartikel und/oder Bereitstellen einer weiteren glasigen Komponente
- Berechnen des Volumenanteils des Füllstoffs im Beschichtungsmittel
- Zugabe des Füllstoffs entsprechend des berechneten Volumenanteils zum Beschichtungsmittel,
- Dispergieren.

Der Dispergierschritt kann hierbei zweckmäßig mittels üblicher Dispergierverfahren erfolgen, beispielsweise in einem Dreiwalzenstuhl oder über einen Dissolver.

Das beschriebene Verfahren eignet sich insbesondere für Komponenten, welche thermische Ausdehnungskoeffizienten in den Grenzen aufweisen, wie sie in der folgenden Tabelle aufgeführt sind. Die Angabe des linearen thermischen Ausdehnungskoeffizienten erfolgt dabei in Einheiten von $10^{-6}$/K. Im unteren Bereich der Tabelle ist aufgeführt, in welchen Grenzen auf diese Weise die resultierenden thermischen Ausdehnungskoeffizienten der Beschichtung variieren können bei 10%-tiger Füllstoffzugabe bei unterschiedlichen glasigen Komponenten.

| Komponente | Ausdehnungskoeffizient [*$10^{-6}$/K] | |
|---|---|---|
| | Untere Grenze | Obere Grenze |
| Pigment | 9,5 | 10,9 |
| Glassubstrat | 8,8 | 9,5 |
| Glasige Komponente | 7 | 9 |
| weitere glasige Komponente (wgK) | 4,3 | 4,3 |
| Füllstoff, Beispiel | 0,5 | 0,6 |
| $\alpha$ (10 Gew.-% Füllstoff) | 6,4, vorzugsweise 6,65 | 8,2, vorzugsweise 8,0 |
| $\alpha$ (10 Gew.-% wgK) | 6,8 | 8,3 |

Das Glaselement nach der vorliegenden Offenbarung ist beispielsweise geeignet für die Verwendung als Bedienblende oder als Sichtscheibe, beispielsweise als Sichtscheibe in einer Backofentür, oder als Waschmaschinentür oder Waschmaschinendeckel, oder als Tür oder Deckel eines Trockners, oder als Abdeckplatte (oder sogenannte Kochfläche), beispielsweise für einen Gasbrenner, oder als Einlegeboden, beispielsweise als Einlegeboden für einen Kühlschrank, oder als Sichtscheibe für einen Kamin oder einen Ofen, oder als opake Abdeckplatte und/oder opake Gerätefront.

Beispiele

Im Folgenden sind Beispiele für Beschichtungsmittel nach der vorliegenden Offenbarung aufgeführt. Als Pigment wurde dabei jeweils CI Pigment Black 28 eingesetzt, ein Kupfer-Chrom-Spinell, wobei zwei unterschiedliche Typen Pigment Black 28 zum Einsatz kamen, die sich insbesondere hinsichtlich der mittleren Teilchengröße, bezogen auf den $d_{50}$-Wert des Äquivalentdurchmessers, unterschieden. Pigment A wies dabei eine mittlere Größe zwischen 0,6 $\mu$m und 1,5 $\mu$m auf, Pigment B zwischen 0,4 $\mu$m und 1,2 $\mu$m.

In der folgenden Tabelle sind weitere Beispiele für Füllstoffe (Nr. 1 bis 4) sowie zu einem Glaspulver als weitere glasige Komponente (Nr. 5) aufgeführt, welche als Zusatzstoff in der Beschichtung nach der vorliegenden Offenbarung verwendet werden können.

| Nr. | Material | Dichte | mittlere Größe ($d_{50}$) ($\mu$m) | Sonstiges |
|-----|----------|--------|-----------------------------------|-----------|
| 1 | Sphärisches $SiO_2$-Pulver | 2,2 | 0,4 | Amorph |
| 2 | Quarz | 2,3 | 6 | kristallin |
| 3 | Polymethylsilsesquioxane Perlen | 1,3 | 0,8 | amorph |
| 4 | Sphärisches $SiO_2$-Pulver | 2,2 | 2,48 | amorph |
| 5 | Glaspulver | 2,0 | | amorph |

Bei dem Glaspulver handelt es sich um ein solches, welches eine Zusammensetzung in den weiter vorne genannten Zusammensetzungsbereichen aufweist.

Die verwendete glasige Komponente weist vorzugsweise eine Zusammensetzung umfassend folgende Komponenten in den folgenden Zusammensetzungsbereichen auf (alle Angaben in Gew.-%):

| Komponente | min | max |
|------------|-----|-----|
| $Li_2O$ | 0,1 | 3 |
| $Na_2O$ | 2,5 | 12 |
| $K_2O$ | 0 | 2,5 |
| CaO | 0,015 | 2,0 |
| SrO | 0,0 | 1 |
| ZnO | 5 | 35 |
| $B_2O_3$ | 1 | 22,8 |
| $Al_2O_3$ | 0,1 | 20 |
| $SiO_2$ | 15 | 45 |
| $P_2O_5$ | 0 | 1,0 |
| $TiO_2$ | 1 | 7 |
| $ZrO_2$ | 0 | 2 |
| $Bi_2O_3$ | 0,07 | 55 |
| F | 0 | 3 |
| Cl | 0 | 1 |

Weiterhin können noch weitere Komponenten umfasst sein, beispielsweise MnO oder NiO, jeweils vorzugsweise unter 2 Gew.-%, sowie gegebenenfalls weitere Zusätze und/oder Verunreinigungen.

In der folgenden Tabelle sind einige Beispiele zusammengestellt. Das Substrat war jeweils ein gefloatetes Kalk-Natron-Glas. Als Pigment wurde das vorstehend genannte Pigment A verwendet. Die Prozentangaben beziehen sich jeweils auf den Volumenanteil des Feststoffgehalts der Paste. Der Auftrag der Beschichtung erfolgte jeweils mittels Siebdruck mit einem 77er Siebdruckgewebe. Gleichfalls angegeben ist das Anpastverhältnis von Pulver zu Medium, also dem verwendeten Siebdruckmedium oder Siebdrucköl, bezogen auf das Gewicht. Die Farbortmessung erfolgte auf der Farbseite gegen eine Schwarzkachel. Der Einbrand der Beschichtung erfolgte jeweils in einem Vorspannofen. VB steht für Vergleichsbeispiel. Die Glasfritte war hier eine bismuthaltige Glasfritte.

| Beispiel | 1 | 2 | 3 | VB. |
|---|---|---|---|---|
| **Zusammensetzung Schicht** | | | | |
| Anteil glasige Komponente | 59,3 % | 60,1 % | 54,6 % | 70% |
| Anteil Pigment A | 25,2 % | 25,5 % | 23,5 % | 30% |
| Zusatzstoffe | 1 | 5 | 5 | - |
| Zusatzstoff Anteil | 15,5% | 14,4% | 21,9 % | - |
| Medium Anpastverhältnis | 10:3,4 | 10:3,4 | 10:3,6 | 10:3,3 |
| **Eigenschaften des beschichteten Substrats - Einfachdruck** | | | | |
| Sklerometertest 10 N | ok | ok | ok | ok |
| Optische Dichte | 1,7 | 2,1 | 2,2 | 2,6 |
| L*a*b* | 29,9/-0,3/-1,4 | 26,7/-0,1/-0,7 | 25,7/0/-0,7 | 26,2/-0,1/-0,8 |
| Kugelfalltest (Durchschnitt in cm) | 89 | 86 | 81 | 64,0 |

In der folgenden zweiteiligen Tabelle sind weitere Beispiele zusammengestellt. Das Substrat war auch hier jeweils gefloatetes Kalk-Natron-Glas. Die Prozentangaben beziehen sich jeweils auf den Volumenanteil des Feststoffgehalts in der Paste. Als Pigment wurde auch hier jeweils das Pigment A verwendet. Der Auftrag der Beschichtung erfolgte jeweils mittels Siebdruck als Einfachdruck. Gleichfalls angegeben ist das Anpastverhältnis von Pulver zu Medium, also dem verwendeten Siebdruckmedium oder Siebdrucköl, ebenfalls bezogen auf das Gewicht. Die Farbortmessung erfolgte auf der Farbseite gegen eine Schwarzkachel. Der Einbrand der Beschichtung erfolgte jeweils in einem Laborofen. Die Angabe zu den Füllstoffen beziehen sich auf die Nummern in der vorstehenden Tabelle, in der Füllstoffe gelistet sind. Verwendet wurden unterschiedliche Glasfritte (1 und 2), welche in beiden Fällen Bismut enthielten. Im Falle der Glasfritte 2 handelte es sich um eine hoch-bismuthaltige Glasfritte. Die Glasfritte 1 wurde auch bei allen Beispielen der vorangegangenen Tabelle verwendet.

Teil 1

| Beispiel | 4 | 5 | 6 | 7 | 8 |
|---|---|---|---|---|---|
| **Zusammensetzung Schicht** | | | | | |
| **Glasfritte Nr.** | **1** | **2** | **2** | **1** | **1** |
| Anteil Glas | 59,3 | 60,0 | 50,0 | 48,1 | 60,1 |
| Anteil Pigment | 25,2 | 26,0 | 22,0 | 20,6 | 25,5 |
| Füllstoff | 1 | 1 | 1 | 1 | 5 |
| Anteil Füllstoff | 15,5 | 14,0 | 28,0 | 31,3 | 14,4 |
| Medium Anpastverhältnis | 10:3,4 | 10:3,3 | 10:4,3 | 10:4,5 | 10:3,4 |
| **Eigenschaften des beschichteten Substrats** | | | | | |
| Sklerometertest 10 N | ok | ok | ok | ok | ok |
| Optische Dichte | 2,2 | 3,3 | 2,2 | 1,3 | 1,9 |
| Glanz (60°) | 81 | 54 | 4 | 3 | 109 |
| L*a*b* (SCE; on color side, black background) | 32,3/ -0,2/ -2,0 | 32,7/-0,1/ -1,7 | 32,3/ -0,2/ -2 | 30,5/ -0,2/ -2,25 | 34,1/ -0,4/ -2,1 |

Teil 2

| Beispiel | 9 | 10 | 11 |
|---|---|---|---|
| **Zusammensetzung Schicht** | | | |
| **Glasfritte Nr.** | **1** | **1** | **1** |
| Anteil Glas | 54,8 | 58,6 | 60 |
| Anteil Pigment | 23,2 | 25,3 | 26 |
| Füllstoff | 5 | 2 | 4 |
| Anteil Füllstoff | 22,0 | 16,1 | 14 |
| Medium Anpastverhältnis | 10:3,6 | 10:3,3 | 10:3,3 |
| **Eigenschaften des beschichteten Substrats** | | | |
| Sklerometertest 10 N | ok | ok | ok |
| Optische Dichte | 1,6 | 1,9 | 1,7 |
| Glanz (60°) | 107 | 50 | 86 |
| L*a*b* (SCE; on color side, black background) | 33,2/ -0,3/ -2 | 36,0/ -0,5/ -2,9 | 32,9/ -0,3/ -2,0 |

In der folgenden Tabelle sind beispielhaft die Kugelfallwerte (Mittelwert), ermittelt an einer Gesamtheit von 40 Proben der Dicke 4 mm. Die Glaselemente lagen dabei jeweils thermisch vorgespannt vor. Für die Herstellung der Proben wurde dabei die keramische Farbe DV173170 der Firma Prince Minerals verwendet, der entsprechend Füllstoffe zugesetzt wurden. Dabei zeigt sich, dass durch die Verwendung eines Füllstoffs eine Verbesserung der Bruchfestigkeit resultiert.

| Beispiel Nummer | Referenz | 1 | 2 | 3 | 4 |
|---|---|---|---|---|---|
| Prince Minerals - DV173170 | x | x | x | x | x |
| Füllstoffgehalt in Vol.-% | 0 | 5 | 10 | 15 | 10 |
| weitere glasige Komponente | | x | x | x | |
| Füllstoff (Kieselsäure) | | | | | x |
| Mittelwert Kugelfalltest Höhe (Zoll) | 29 | 32 | 36 | 36 | 36 |

Beschreibung der Zeichnungen

Im Folgenden wird die Erfindung anhand von Figuren näher erläutert. Dabei beziehen sich gleiche Bezugszeichen auf dieselben oder einander entsprechende Elemente. Es zeigen

Fig. 1 bis 3    schematische und nicht maßstabsgetreue Seitenansichten von Glaselementen

Fig. 4 und 6    jeweils eine schematische und nicht maßstabsgetreue Darstellung eines Ausschnitts einer Beschichtung,
Fig. 5           eine schematische und nicht maßstabsgetreue Aufsicht auf ein Glaselement, und
Fig. 7           ToF-SIMS-Profile von Ausführungsformen sowie einem Vergleichsbeispiel.

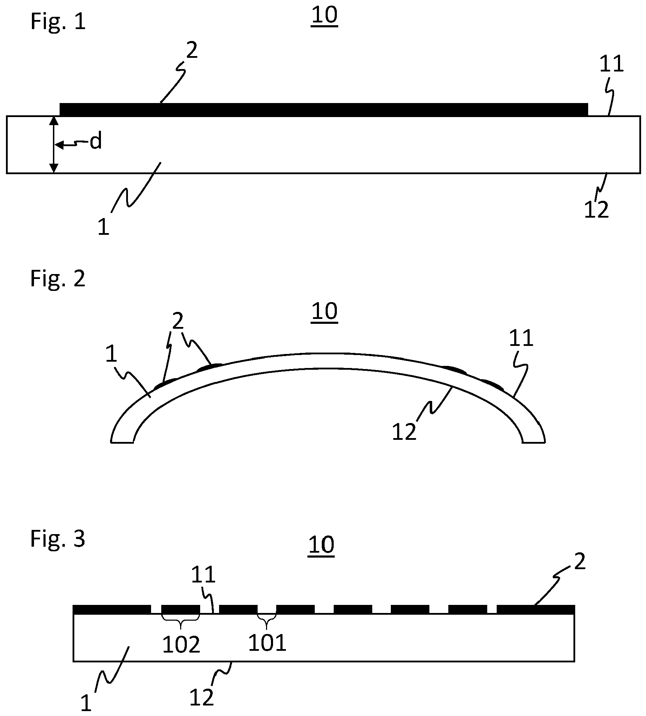

Fig. 1 zeigt eine erste schematische und nicht maßstabsgetreue Abbildung eines Glaselements 10, das ein scheibenförmiges Glassubstrat 1 umfasst. Das scheibenförmige Glassubstrat 10 ist hier eben ausgebildet, also nicht gekrümmt. Das scheibenförmige Glassubstrat 1 weist eine erste Oberfläche 11 sowie eine zweite Oberfläche 12 auf, welche der ersten Oberfläche 11 gegenüberliegt. Die Oberflächen können auch als Seiten oder Seitenflächen bezeichnet werden und stellen sogenannte Hauptflächen des Glassubstrats 1 bzw. entsprechend des Glaselements 10 dar, denn sie machen zusammen mehr als 50 % der Oberfläche des Substrats aus. Weiterhin ist auch die Dicke d des Glassubstrats 1. Die Dicke des Glassubstrats 1 kann dabei auch näherungsweise als die Dicke des Glaselements 10 angenommen werden, denn anders als vorliegend aus Gründen der besseren Darstellbarkeit ist die (nicht bezeichnete) Dicke der Beschichtung 2 nur sehr gering im Vergleich zur Dicke des Glassubstrats 1. Die Beschichtung 2 ist auf wenigstens einer der Oberflächen 11, 12, nämlich hier auf der Oberfläche 11 des Glassubstrats 1, zumindest bereichsweise angeordnet. Hierunter ist zu verstehen, dass die Beschichtung 2 nicht die gesamte Oberfläche 11 bedecken muss, sondern auch lediglich in einem Abschnitt aufgebracht sein kann, sodass ein anderer Bereich der Oberfläche nicht mit der Beschichtung 2 bedeckt ist. Hier ist die Beschichtung in einem mittleren Bereich der Oberfläche 11 angeordnet, sodass ein Randbereich frei bleibt. Selbstverständlich ist aber auch eine vollflächige Belegung möglich. Es ist weiterhin auch möglich, dass die Beschichtung nicht nur auf einer Oberfläche angeordnet ist, sondern auf beiden Oberflächen 11, 12 des Glassubstrats. Die Beschichtung 2 ist als anorganische, glasbasierte Beschichtung, vorzugsweise als Emaillebeschichtung, ausgebildet. Sie umfasst wenigstens eine glasige Komponente, vorzugsweise eine glasige Komponente, welche bei Erwärmung aufschmilzt, sodass die glasige Komponente beispielsweise auch als Glasfluss oder Glasfritte ausgebildet sein kann. Eine solche Ausgestaltung kann besonders vorteilhaft sein, denn in diesem Fall kann die glasige Komponente ganz besonders gut als Bindemittel wirken und die weiteren Komponenten der Beschichtung, also das Pigment und einen gegebenenfalls von der Beschichtung umfassten Füllstoff umhüllen und miteinander und mit dem Substrat 1 verbinden. Allgemein ist es auch möglich, dass die Beschichtung 2 zusätzlich oder alternativ zu einem Füllstoff eine weitere glasige Komponente umfasst.

Umfasst die Beschichtung 2 einen Füllstoff, weisen vorteilhaft die vom Füllstoff umfassten Füllstoffpartikel mit einem $d_{50}$-Wert, bezogen auf den Äquivalentdurchmesser, von mindestens 0,1 $\mu$m, bevorzugt mindestens 0,3 $\mu$m, und weniger als 10 $\mu$m, bevorzugt weniger als 5 $\mu$m auf. Vorzugsweise resultiert aus der vorstehend beschrieben Ausgestaltung der Beschichtung 2 ein thermischer Ausdehnungskoeffizient der Beschichtung 2, welcher kleiner oder gleich dem thermischen Ausdehnungskoeffizienten des Glassubstrats 1 ist.

Fig. 2 zeigt eine weitere schematische und nicht maßstabsgetreue Darstellung einer Ausführungsform eines Glaselements 10 umfassend ein scheibenförmiges Glassubstrat 1. Das scheibenförmiges Glassubstrat 1 weist hier wiederum zwei Oberflächen 11, 12, auf, welche einander gegenüberliegen, und auf einer der Oberflächen 11, 12, nämlich hier der Oberfläche 11, ist bereichsweise die Beschichtung 2 angeordnet. Das scheibenförmige Substrat 1 ist hier als gebogene Scheibe ausgebildet. Allgemein, ohne Beschränkung auf das hier dargestellte Beispiel, ist es möglich, dass beide Oberflächen 11, 12 zumindest bereichsweise eine Beschichtung 2 umfassen.

Fig. 3 zeigt eine nochmals weitere Darstellung einer Ausführungsform eines Glaselements 10 zur genaueren Erläuterung einer lateral strukturierten Auftragung der Beschichtung 2. Das Glaselement 10 ist hier so ausgestaltet, dass die Beschichtung 2 lateral strukturiert aufgebracht ist. Dies bedeutet, dass wenigstens ein Bereich 101 der Oberfläche 11, 12, hier der Oberfläche 11, des Glassubstrats 1 keine Beschichtung 2 aufweist, wohingegen ein anderer Bereich 102 die Beschichtung 2 aufweist. Auch hier ist es wieder ganz allgemein möglich, dass die Beschichtung 2 beidseitig aufgebracht ist.

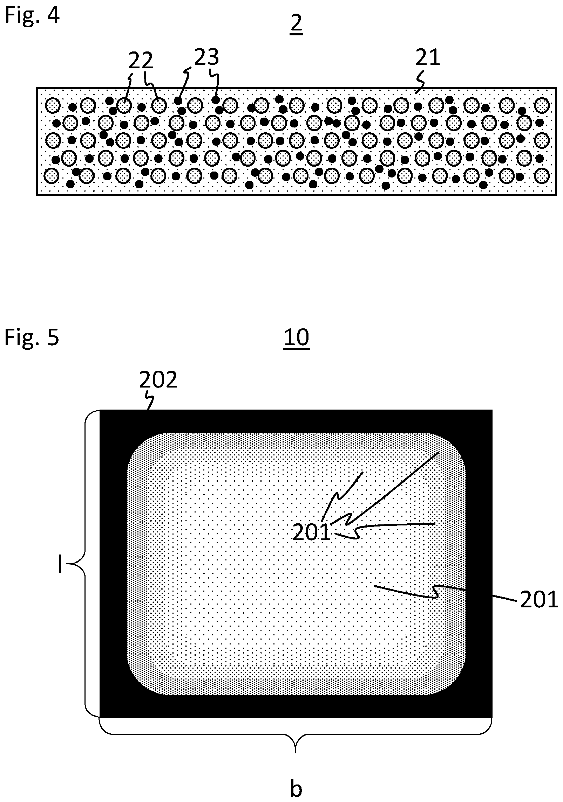

Fig. 4 zeigt eine schematische und nicht maßstabsgetreue Schnittdarstellung einer Beschichtung 2 nach einer Ausführungsform. Die Beschichtung 2 ist als anorganische, glasbasierte Beschichtung ausgebildet, vorzugsweise als Emaillebeschichtung. Sie umfasst eine glasige Komponente 21, welche vorzugsweise in einem Einbrennvorgang zumindest partiell aufschmilzt und insbesondere auch als Glasfluss oder Glasfritte ausgebildet sein kann. Durch das Aufschmelzen kann die glasige Komponente vorteilhaft partikuläre Bestandteile der Beschichtung, wie beispielsweise ein Pigment umfassend Pigmentpartikel 22 sowie einen Füllstoff umfassend Füllstoffpartikel 23 zumindest teilweise umhüllen und miteinander sowie optimalerweise mit dem (nicht dargestellten) Substrat 1 verbinden. Der besseren Übersichtlichkeit halber sind nicht alle Pigment- und Füllstoffpartikel 22, 23 bezeichnet. Die glasige Komponente 21 kann mithin auch als Beschichtungsmatrix oder Bindemittel verstanden werden. Die Beschichtung ist mithin ein Gemisch verschiedener Komponente, sodass ein thermischer Ausdehnungskoeffizient der Beschichtung resultiert, welcher sich aus dem Volumenanteil der einzelnen Komponenten sowie deren jeweiligen Ausdehnungskoeffizienten ergibt und wie weiter oben ausgeführt berechnen lässt. Vorteilhaft ist dieser resultierende thermische Ausdehnungskoeffizient der Beschichtung vorzugsweise kleiner oder gleich dem thermischen Ausdehnungskoeffizienten des Glassubstrats ist.

Gemäß einer Ausführungsform weisen die Füllstoffpartikel 23 einen thermischen Ausdehnungskoeffizienten von mindestens $0,5 *10^{-6}$/K und vorzugsweise höchstens $15*10^{-6}$/K, bevorzugt höchstens $10*10^{-6}$/K, $8 *10^{-6}$/K, mehr bevorzugt höchstens $5 * 10^{-6}$/K, noch mehr bevorzugt höchstens $3 * 10^{-6}$/K und ganz besonders bevorzugt höchstens $0,6 *10^{-6}$/K auf, sodass vorzugsweise ein resultierender thermischer Ausdehnungskoeffizient der Beschichtung 2 von höchstens $9*10^{-6}$/K, bevorzugt $8,3 *10^{-6}$/K erhalten ist oder wird, wobei vorzugsweise der resultierende thermische der Beschichtung mindestens $6*10^{-6}$/K ist, besonders bevorzugt mindestens $6,4*10^{-6}$/K.

Bevorzugt liegt der Unterschied der thermischen Ausdehnungskoeffizienten des Glassubstrats 1 und der Beschichtung 2 zwischen mindestens $0,5 *10^{-6}$/K und höchstens $3,1 *10^{-6}$/K.

Fig. 5 zeigt schließlich eine Aufsicht auf eine beispielhaftes Glaselement 10 nach einer Ausführungsform. Das Glaselement 10 bzw. in entsprechender Weise das (hier nicht bezeichnete) Glassubstrat 1 weist eine Länge l und eine Breite b auf. Die Beschichtung 2 ist hier in der Form lateral strukturiert auf einer Oberfläche des Glassubstrats angeordnet, dass in einem Randbereich des Glaselements die Beschichtung als deckende Beschichtung in Form eines Rahmens 202 aufgebracht ist. Unter einer deckenden Beschichtung wird hierbei verstanden, dass im Bereich des Rahmens der Belegungsgrad der Beschichtung nahezu 100% ist, da im Bereich des Rahmens die Beschichtung 2 vollflächig aufgebracht ist. In einem mittleren Bereich des Substrats 1 bzw. des Glaselements 10 ist die Beschichtung in Form von Rastern 201 mit unterschiedlichen Belegungsgraden aufgebracht. Vorzugsweise ist der für die gesamte Oberfläche des Glaselements 10 berechnete Belegungsgrad zwischen mindestens 60% und höchstens 90%. Bevorzugt ist der Belegungsgrad mindestens 65%, besonders bevorzugt mindestens 70%.

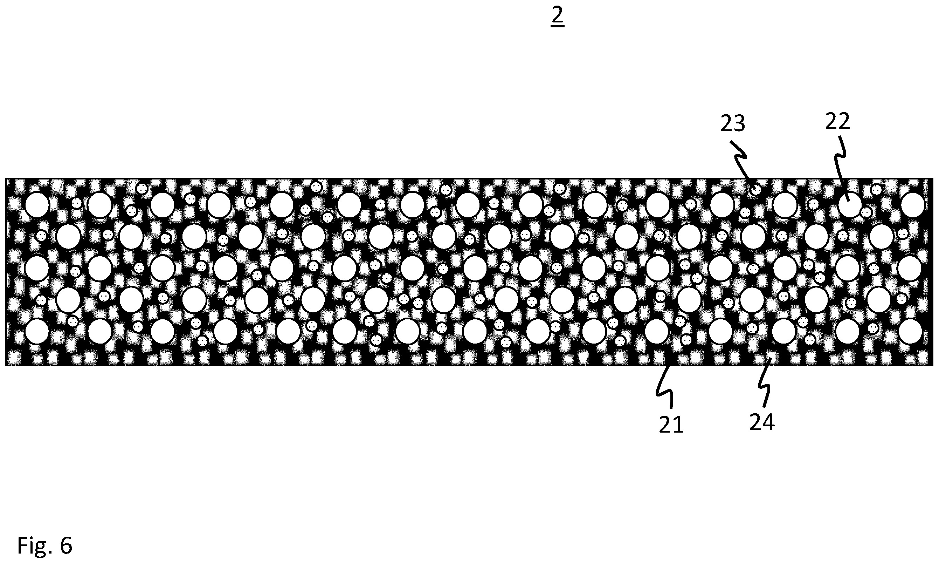

Fig. 6 zeigt eine weitere Variante einer Ausführungsform einer Beschichtung 2. Die Beschichtung 2 ist hier so aufgebaut, dass sie Pigmentpartikel 22 und Füllstoffpartikel 23 umfasst sowie eine erste glasige Komponente 21 und eine zweite glasige Komponente 24. Allgemein, ohne Beschränkung auf das in Fig. 6 dargestellte Beispiel einer Beschichtung 2 ist es auch möglich, dass die Beschichtung 2 keinen Füllstoff umfassend Füllstoffpartikel umfasst, sondern lediglich eine glasige Komponente 21 sowie eine weitere glasige Komponente 24. Allgemein ist es gemäß einer Ausführungsform der Beschichtung 2 möglich, wie in Fig. 6 beispielhaft dargestellt, dass die Beschichtung 2 so ausgebildet ist, dass sie zwei unterschiedliche glasige Phasen 21, 24 umfasst und damit eine Glasmatrix umfassend diese beiden glasigen Phasen 21, 24, erhalten wird. Die Glasmatrix, welche die Partikel der Beschichtung 2 vorzugsweise vollständig umgibt, umhüllt mit dem Glassubstrat 1 (nicht dargestellt) verbindet, ist also gemäß dem Beispiel aus Fig. 6 nicht homogen ausgebildet, sondern umfasst zwei unterschiedliche Glasphasen. Diese können sich insbesondere hinsichtlich ihrer Zusammensetzung unterscheiden, was beispielsweise mittels ToF-SIMS sichtbar gemacht werden kann.

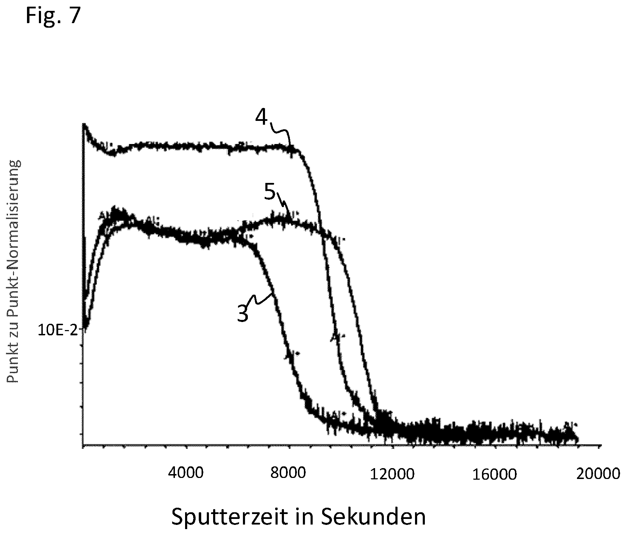

Fig. 7 zeigt eine Darstellung von ToF-SIMS-Profilen des Beispiels 1 (Kurve Nr. 3) sowie des Beispiels 2 (bezeichnet als Kurve Nr. 4) sowie des Vergleichsbeispiels (VB), benannt als Kurve 5. Dargestellt ist hier das Signal von $Al^{3+}$. Wie man erkennen kann, ist das Signal für $Al^{3+}$ in Kurve 4 deutlich stärker, denn das als weitere glasige Komponente zugegebene Material umfasst doppelt soviel Al wie die Grundemaille (die glasige Komponente). Dabei ist dieser erhöhte Al-Gehalt der Beschichtung aber nicht gleichmäßig in der Beschichtung verteilt, sondern es kann vielmehr in graphischen Auswertungen von ToF-SIMS-Messungen auch gezeigt werden, dass sich die weitere glasige Komponente nicht vollkommen mit der glasigen Komponente einer Grundemaille mischt.

Bezugszeichenliste

| | |
|---|---|
| 1 | Glassubstrat |
| 10 | Glaselement |
| 11, 12 | Oberflächen |
| 101 | Bereich einer Oberfläche ohne Beschichtung |
| 102 | Bereich einer Oberfläche mit Beschichtung |
| 2 | Beschichtung |
| 201 | Raster |
| 202 | Rahmen |
| 21 | Glasige Komponente |
| 22 | Pigmentpartikel |
| 23 | Füllstoffpartikel |
| 24 | Zweite glasige Komponente |
| 3 | ToF-SIMS-Profil von Beispiel 1 |
| 4 | ToF-SIMS-Profil von Beispiel 2 |
| 5 | ToF-SIMS des Vergleichsbeispiels |
| d | Dicke des Glassubstrats |
| l | Länge des Glassubstrats/-elements |
| b | Breite des Glassubstrats/-elements |

**Patentansprüche**

1. Glaselement (10), insbesondere vorgespanntes, bevorzugt thermisch vorgespanntes Glaselement, umfassend ein scheibenförmiges Glassubstrat (1) mit einer ersten Oberfläche (11) und einer zweiten, der ersten Oberfläche (11) gegenüberliegenden Oberfläche (12) sowie einer auf wenigstens einer der Oberflächen (11, 12) des Glassubstrats (1) zumindest bereichsweise angeordneten Beschichtung (2), wobei die Beschichtung (2) als anorganische, glasbasierte Beschichtung, vorzugweise als Emaillebeschichtung, ausgebildet ist, umfassend wenigstens eine glasige Komponente (21), wenigstens ein Pigment umfassend Pigmentpartikel (22), sowie

einen Füllstoff, wobei der Füllstoff anorganisch ausgebildet ist und Füllstoffpartikel (23) mit einem $d_{50}$-Wert, bezogen auf den Äquivalentdurchmesser, von mindestens 0,1 $\mu$m, bevorzugt mindestens 0,3 $\mu$m, und weniger als 10 $\mu$m, bevorzugt weniger als 5 $\mu$m, umfasst,

und/oder

eine weitere glasige Komponente (24), wobei die resultierende Glasmatrix der Beschichtung (2) insbesondere inhomogen ausgebildet sein kann,

wobei vorzugsweise aus der Zusammensetzung der Beschichtung (2) ein thermischer Ausdehnungskoeffizient der Beschichtung resultiert, welcher kleiner oder gleich dem thermischen Ausdehnungskoeffizienten des Glassubstrats (1) ist.

2. Glaselement (10) nach Anspruch 1, wobei die Füllstoffpartikel (23) und/oder die weitere glasige Komponente (24) einen thermischen Ausdehnungskoeffizienten von mindestens 0,5 $*10^{-6}$/K und vorzugsweise höchstens 15$*10^{-6}$/K, bevorzugt höchstens 10$*10^{-6}$/K, besonders bevorzugt höchstens 8 $*10^{-6}$/K, mehr bevorzugt höchstens 5 $* 10^{-6}$/K, noch mehr bevorzugt höchstens 3 $* 10^{-6}$/K und ganz besonders bevorzugt höchstens 0,6 $*10^{-6}$/K aufweisen, sodass vorzugsweise ein resultierender thermischer Ausdehnungskoeffizient der Beschichtung (2) von höchstens 9$*10^{-6}$/K, bevorzugt 8,3 $*10^{-6}$/K erhalten ist oder wird, wobei vorzugsweise der resultierende thermische Ausdehnungskoeffizient der Beschichtung mindestens 6$*10^{-6}$/K ist, besonders bevorzugt mindestens 6,4$*10^{-6}$/K.

3. Glaselement (10) nach einem der Ansprüche 1 oder 2, wobei der Unterschied der thermischen Ausdehnungskoeffizienten des Glassubstrats (1) und der Beschichtung (2) zwischen mindestens 0,5 $*10^{-6}$/K und höchstens 3,1 $*10^{-6}$/K liegt.

4. Glaselement (10) nach einem der Ansprüche 1 bis 3, aufweisend einen Farbort mit einem L*-Wert von mehr als 60 und einer optischen Dichte von mehr als 1 oder aufweisend einen Farbort von weniger als 60 und einer optischen Dichte von mehr als 2 in einem Bereich, in welchem die Beschichtung (2) angeordnet ist.

5. Glaselement (10) nach einem der Ansprüche 1 bis 4, wobei die glasige Komponente (21) der Beschichtung (2) die folgenden Komponenten in Gew.-% auf Oxidbasis umfasst:

| | |
|---|---|
| $SiO_2$ | 30-75, bevorzugt 44-75 |
| $Al_2O_3$ | 0-25, bevorzugt 0,2-25, besonders bevorzugt 2-25 |
| $B_2O_3$ | 0-30, bevorzugt 1-30, besonders bevorzugt 5-30 |
| $Li_2O$ | 0-12 |
| $Na_2O$ | 0-25, bevorzugt 0-15 |
| CaO | 0-12 |
| MgO | 0-9 |
| BaO | 0-27 |
| SrO | 0-4 |
| ZnO | 0-35, bevorzugt 0-20 |
| $Bi_2O_3$ | 0-5 |
| $TiO_2$ | 0-10, bevorzugt 0-5 |
| $ZrO_2$ | 0-7 |
| $AS_2O_3$ | 0-1 |
| $Sb_2O_3$ | 0-1,5 |
| F | 0-3 |
| Cl | 0-1, bevorzugt bis auf unvermeidliche Spuren frei von Cl |
| $H_2O$ | 0-3 |

oder wobei die glasige Komponente (21) der Beschichtung (2) die folgenden Komponenten in Gew.-% auf Oxidbasis umfasst:

| | |
|---|---|
| $SiO_2$ | 6-65, bevorzugt 10-65, besonders bevorzugt 15-65 |
| $Al_2O_3$ | 0-20 |
| $B_2O_3$ | 0-40, bevorzugt 1-30, besonders bevorzugt 3-30 |
| $Li_2O$ | 0-12 |
| $Na_2O$ | 0-18 |
| $K_2O$ | 0-17 |
| $CaO$ | 0-17 |
| $MgO$ | 0-12 |
| $BaO$ | 0-38 |
| $SrO$ | 0-16 |
| $ZnO$ | 0-70 |
| $TiO_2$ | 0-10, bevorzugt 0-5 |
| $ZrO_2$ | 0-5 |
| $Bi_2O_3$ | 0-75, bevorzugt 0-60, bevorzugt 5-60, besonders bevorzugt 10-60 |
| $CoO$ | 0-5 |
| $Fe_2O_3$ | 0-5 |
| $MnO$ | 0-10 |
| $CeO_2$ | 0-3 |
| $F$ | 0-3 |
| $Cl$ | 0-1 |
| $H_2O$ | 0-3. |

6. Glaselement (10) nach einem der Ansprüche 1 bis 5, wobei das Glassubstrat (1) ein Kalk-Natron-Glas umfasst oder aus Kalk-Natron-Glas ausgebildet ist.

7. Glaselement (10) nach einem der Ansprüche 1 bis 6, **gekennzeichnet durch** eine Bruchfestigkeit, bestimmt in einem Kugelfalltest, vorzugsweise einem in Anlehnung an DIN 52306 durchgeführten Testverfahren, von mindestens 70 cm oder mindestens 28 Zoll, vorzugsweise mindestens 80 cm oder mindestens 31 Zoll, bezogen auf eine Dicke des Glaselements von 4 mm.

8. Glaselement (10) nach einem der Ansprüche 1 bis 7, wobei die Füllstoffpartikel $SiO_2$ und/oder $Al_2O_3$ umfassen.

9. Glaselement (10) nach einem der Ansprüche 1 bis 8, wobei die Beschichtung (2) lateral strukturiert angeordnet ist, sodass ein Bereich (101) der Oberfläche (11, 12) des Glaselements (10), auf welcher die Beschichtung angeordnet ist, keine Beschichtung (2) aufweist, und ein anderer Bereich (102) die Beschichtung (2) aufweist, wobei vorzugsweise die Beschichtung (2) in Form eines Rasters (201), beispielsweise eines Punktrasters, und/oder eines Rahmens (202), aufgebracht ist oder wird.

10. Glaselement (10) nach einem der Ansprüche 1 bis 9, wobei der Belegungsgrad der wenigstens einen Oberfläche (11, 12), auf welcher die Beschichtung (2) angeordnet ist, mit der Beschichtung (2) zwischen 60 %, bevorzugt 65%, besonders bevorzugt 70%, und 90 % liegt.

11. Glaselement (10) nach einem der Ansprüche 1 bis 10, mit einer Dicke zwischen 3 mm und 10 mm.

12. Glaselement (10) nach einem der Ansprüche 1 bis 11, wobei die Beschichtung eine Dicke von bis zu 20 $\mu$m, vorzugsweise von höchstens 10 $\mu$m, aufweist, wobei die Beschichtung vorzugsweise wenigstens 1 $\mu$m dick ist.

13. Beschichtungsmittel zur Herstellung einer glasbasierten anorganischen Beschichtung (2), vorzugsweise einer Emaillebeschichtung, auf einem Glassubstrat, wobei das Beschichtungsmittel feste Komponenten, die einen Feststoffanteil des Beschichtungsmittels definieren, sowie wenigstens eine flüssige Komponente, beispielsweise ein Lösungsmittel, umfasst, wobei die festen Komponenten umfassen

- wenigstens eine glasige Komponente (21),

- wenigstens ein Pigment umfassend Pigmentpartikel (22),
- wenigstens einen Füllstoff umfassend Füllstoffpartikel (23) und/oder wenigstens eine weitere glasige Komponente (24),

wobei der Füllstoff anorganisch ausgebildet ist und Füllstoffpartikel (23) mit einem $d_{50}$-Wert, bezogen auf den Äquivalentdurchmesser, zwischen mindestens 0,1 $\mu$m, vorzugsweise mindestens 0,3 $\mu$m, und weniger als 10 $\mu$m umfasst.

14. Beschichtungsmittel nach Anspruch 13, aufweisend wenigstens eines der folgenden Merkmale:

- das Verhältnis der Summe der Feststoffbestandteile und der Summe der flüssigen Bestandteile des Beschichtungsmittels liegt zwischen 2 und 3,5, bezogen auf das Gewicht, bevorzugt zwischen 2,2 und 3,1,
- der Anteil der glasigen Komponente (21) am Feststoffanteil beträgt zwischen 58 Vol.-% und 78 Vol.-%,
- der Anteil des Pigments am Feststoffanteil beträgt zwischen 5 Vol.-% und 35 Vol.-%, bevorzugt zwischen 5 Vol.-% und 21 Vol.-%,
- der Anteil des Füllstoffs am Feststoffanteil beträgt zwischen 0,01 Vol.-% und 60 Vol.-%, bevorzugt höchstens 35 Vol.-%, besonders bevorzugt höchstens 19 Vol.-% und ganz besonders bevorzugt höchstens 15 Vol.-%.

15. Verfahren zur Herstellung eines Beschichtungsmittels, insbesondere eines Beschichtungsmittels nach einem der Ansprüche 13 oder 14, umfassend wenigstens einen Füllstoff umfassend Füllstoffpartikel, wenigstens ein Pigment umfassend Pigmentpartikel sowie wenigstens eine glasige Komponente, umfassend die Schritte

- Bereitstellen eines Beschichtungsmittels umfassend eine glasige Komponente und wenigstens ein Pigment umfassend Pigmentpartikel
- Festlegen des resultierenden thermischen Ausdehnungskoeffizienten der aus dem Beschichtungsmittels durch Einbrand auf einem Substrat erhaltenen Beschichtung
- Bereitstellen eines Füllstoffs umfassend Füllstoffpartikel und/oder einer weiteren glasigen Komponente (24),
- Berechnen des Volumenanteils des Füllstoffs und/oder der weiteren glasigen Komponente (24) im Beschichtungsmittel
- Zugabe des Füllstoffs und/oder der weiteren glasigen Komponente (24) entsprechend des berechneten Volumenanteils zum Beschichtungsmittel,
- Dispergieren.

16. Verwendung eines Glaselements nach einem der Ansprüche 1 bis 12 als Bedienblende oder als Sichtscheibe, beispielsweise als Sichtscheibe in einer Backofentür, oder als Waschmaschinentür oder Waschmaschinendeckel, oder als Tür oder Deckel eines Trockners, oder als Abdeckplatte (oder sogenannte Kochfläche), beispielsweise für einen Gasbrenner, oder als Einlegeboden, beispielsweise als Einlegeboden für einen Kühlschrank, oder als Sichtscheibe für einen Kamin oder einen Ofen, oder als opake Abdeckplatte und/oder opake Gerätefront.

Fig. 1

Fig. 2

Fig. 3

Fig. 4

2

22    23    21

Fig. 5

10

202

201

201

l

b

Fig. 6

Fig. 7

Europäisches Patentamt

European Patent Office

Office européen des brevets

# EUROPÄISCHER RECHERCHENBERICHT

**Nummer der Anmeldung**

**EP 21 19 4970**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/189968 A1 (SIEBERS FRIEDRICH [DE] ET AL) 18. Juni 2020 (2020-06-18) * Absätze [0011] – [0012], [0047] – [0057], [0071] – [0078], [0101]; Tabellen 1-3 * ----- | 1-16 | INV. C03C1/04 C03C3/076 C03C3/091 C03C3/097 C03C4/02 |
| X | US 2020/189967 A1 (COMPOINT FRANÇOIS [FR] ET AL) 18. Juni 2020 (2020-06-18) * Absätze [0006] – [0025]; Beispiele 1-3 * ----- | 1-16 | C03C8/02 C03C8/04 C03C8/14 C03C17/00 |
| X | FR 3 090 621 A1 (EUROKERA [FR]) 26. Juni 2020 (2020-06-26) * Absätze [0010] – [0044]; Beispiele 1-2 * ----- | 1-16 | C03C17/04 |
| A | US 2013/287989 A1 (KAWANAMI SOHEI [JP]) 31. Oktober 2013 (2013-10-31) * Absätze [0008] – [0011], [0039] – [0048] * ----- | 1-16 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| **München** | **10. Februar 2022** | **Lecerf, Nicolas** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 19 4970

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2022

| Im Recherchenbericht angeführtes Patentdokument | Datum der Veröffentlichung | Mitglied(er) der Patentfamilie | Datum der Veröffentlichung |
|---|---|---|---|
| US 2020189968 A1 | 18-06-2020 | BR 112017000799 A2 | 03-07-2018 |
| | | CN 106536441 A | 22-03-2017 |
| | | EP 3169638 A1 | 24-05-2017 |
| | | ES 2724674 T3 | 13-09-2019 |
| | | KR 20170032331 A | 22-03-2017 |
| | | PL 3169638 T3 | 31-07-2019 |
| | | US 2017113965 A1 | 27-04-2017 |
| | | US 2020189968 A1 | 18-06-2020 |
| | | WO 2016008752 A1 | 21-01-2016 |
| US 2020189967 A1 | 18-06-2020 | BR 112019025060 A2 | 16-06-2020 |
| | | CA 3064485 A1 | 06-12-2018 |
| | | CN 109328181 A | 12-02-2019 |
| | | EP 3630690 A1 | 08-04-2020 |
| | | FR 3067025 A1 | 07-12-2018 |
| | | JP 2020522584 A | 30-07-2020 |
| | | KR 20200016274 A | 14-02-2020 |
| | | MA 48953 A | 08-04-2020 |
| | | RU 2019142692 A | 30-06-2021 |
| | | US 2020189967 A1 | 18-06-2020 |
| | | WO 2018220325 A1 | 06-12-2018 |
| FR 3090621 A1 | 26-06-2020 | CN 113165963 A | 23-07-2021 |
| | | EP 3898542 A1 | 27-10-2021 |
| | | FR 3090621 A1 | 26-06-2020 |
| | | US 2022033675 A1 | 03-02-2022 |
| | | WO 2020126534 A1 | 25-06-2020 |
| US 2013287989 A1 | 31-10-2013 | CN 103328402 A | 25-09-2013 |
| | | JP 5494831 B2 | 21-05-2014 |
| | | JP WO2012090943 A1 | 05-06-2014 |
| | | SG 191382 A1 | 30-08-2013 |
| | | TW 201246527 A | 16-11-2012 |
| | | US 2013287989 A1 | 31-10-2013 |
| | | WO 2012090943 A1 | 05-07-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160185657 A1
- US 5691254 A
- US 5412877 A
- US 20160031748 A1